# EUROPÄISCHE PATENTSCHRIFT

(11) **EP 4 660 602 B1**
(45) Veröffentlichungstag und Bekanntmachung des Hinweises auf die Patenterteilung: **12.08.2026**
(21) Anmeldenummer: 25174248.2
(22) Anmeldetag: 05.05.2025
(51) Int. Cl.: G01M 3/00, G01M 3/28

(54) **SENSORVORRICHTUNG, SENSORVORRICHTUNG, SYSTEM UND VERFAHREN ZUM BESTIMMEN EINES FLUIDFLUSSES DURCH EINE ROHRLEITUNG**
SENSOR DEVICE, SENSOR DEVICE, SYSTEM AND METHOD FOR DETERMINING A FLUID FLOW THROUGH A PIPELINE
DISPOSITIF DE CAPTEUR, DISPOSITIF DE CAPTEUR, SYSTÈME ET PROCÉDÉ DE DÉTERMINATION D'UN ÉCOULEMENT DE FLUIDE À TRAVERS UNE CONDUITE

(30) Priorität: 03.06.2024 DE 102024205104
(43) Veröffentlichungstag der Anmeldung: 10.12.2025
(60) Teilanmeldung: 25220358.3 / 4 682 499
(73) Patentinhaber: Enzo - SafeHome GmbH, 69115 Heidelberg (DE)
(72) Erfinder: Follmann, Marvin, 69207 Sandhausen (DE); Wolf, Sascha, 69115 Heidelberg (DE); Sayed, Sawaiz, 10715 Berlin (DE)
(74) Vertreter: Ullrich & Naumann PartG mbB

(56) Entgegenhaltungen:
- EP-B1- 3 243 080
- WO-A2-2019/086899
- US-A1- 2018 058 891
- US-A1- 2021 372 832

## Beschreibung

Die Erfindung betrifft eine Sensorvorrichtung für eine ein Fluid führende Rohrleitung, insbesondere eine Sensorvorrichtung zur Leckageerkennung.

Des Weiteren betrifft die Erfindung ein System mit einer solchen Sensorvorrichtung und einer entfernten Recheneinheit.

Ferner betrifft die Erfindung ein Verfahren zum Bestimmen eines Fluidflusses durch eine Rohrleitung, insbesondere zur Leckageerkennung, vorzugsweise unter Nutzung einer solchen Sensorvorrichtung.

Sensorvorrichtungen zur Detektion von Leckagen in Rohrleitungen sind aus der Praxis bekannt. Beispielsweise gibt es Wasserzähler, die auch für die Detektion von Leckagen genutzt werden können. Wasserzähler, die an der Hauptwasserleitung installiert sind, können Wasserleckagen jedoch im Allgemeinen nur dann erkennen, wenn der Wasserfluss durch die Leckage ausreichend groß ist. Die üblichen am Markt verfügbaren Modelle erkennen Wasserströme erst ab einem Durchfluss von 50 Litern pro Stunde. Dasselbe gilt für Wasserzähler in Wohnungen. Andere Geräte zur Leckageerkennung werden ebenfalls in das Leitungssystem integriert, wodurch eine Nachrüstung erschwert wird.

Es sind zudem Geräte zur Leckageerkennung bekannt, die unabhängig von einem Wasserzähler oder dem Wasserkreislauf ausgeführt sind. Aus EP 3 254 076 A1 ist beispielsweise ein Konzept zur Analyse eines Wasserflusses bekannt. Eine Analyseeinheit umfasst ein Gehäuse mit elektronischen Komponenten. Aus dem Gehäuse herausgeführt sind ein Temperatursensor oder mehrere Temperatursensoren, die beispielsweise an unterschiedlichen Abschnitten einer Hauswasserleitung, etwa vor und nach einem Wasserhahn, angebracht werden können. Ein solches Analysegerät ist klobig und benötigt eine entfernte Stromquelle. Außerdem findet die Leckageerkennung direkt im Gerät statt, was die vorhandene Prozessorleistung einschränkt. Der Einsatz ist nur bei Einfamilienhäusern möglich. Die Technik setzt auf Gleichgewichtszustände bei den gemessenen Temperaturen.

Weiterhin sind aus der US 2018/058891 A1, der EP 3 243 080 B1, der WO 2019/086899 A2 und der US 2021/372832 A1 Vorrichtungen und Verfahren zur Bestimmung eines Fluidflusses in einer Leitung vorbekannt.

Der vorliegenden Erfindung liegt die Aufgabe zugrunde, eine Sensorvorrichtung zur Erkennung von Leckage bereitzustellen, die auch in Wohnungen oder Mehrfamilienhäusern eingesetzt werden kann, um Leckagen zu erkennen. Des Weiteren liegt die Aufgabe zu Grunde, eine Erkennung von Leckage schon bei sehr geringen Wasserflüssen zu ermöglichen. Weiterhin sollen ein System sowie ein Verfahren zur Leckageerkennung angegeben werden.

Erfindungsgemäß wird die voranstehende Aufgabe durch die Merkmale des Anspruches 1 gelöst. Anspruch 1 befasst sich mit einer Sensorvorrichtung für eine ein Fluid führende Rohrleitung, insbesondere zur Leckageerkennung. Die Sensorvorrichtung umfasst ein Gehäuse zur Anordnung an der Rohrleitung. Die Sensorvorrichtung umfasst einen ersten Temperatursensor, einen zweiten Temperatursensor und eine Auswerteeinrichtung. Die Temperatursensoren sind derart in und/oder an dem Gehäuse angeordnet, dass im an der Rohrleitung befestigten Zustand des Gehäuses, der erste Temperatursensor eine größere Distanz zu der Rohrleitung aufweist als der zweite Temperatursensor. Die Auswerteeinrichtung ist dazu ausgebildet ist, um a) als lokale Recheneinheit erste Sensordaten des ersten Temperatursensors und zweite Sensordaten des zweiten Temperatursensors zu verarbeiten und/oder b) die ersten und zweiten Sensordaten einer entfernten Recheneinheit zur Verarbeitung zu übermitteln, um einen Fluidfluss durch die Rohrleitung zu bestimmen.

In erfindungsgemäßer Weise ist zunächst erkannt worden, dass der Fluss eines Fluids, und insbesondere einer Flüssigkeit, durch eine Rohrleitung in einfacher Weise dadurch erkannt werden kann, dass sich die Temperatur der Rohrleitung bei Durchfluss des Fluids ändert. Zwar wirkt sich der Durchfluss des Fluids auch auf die Umgebungstemperatur aus, jedoch ist diese Temperaturänderung wesentlich geringer und ist lediglich zu dem Zeitpunkt spürbar, in dem größere Mengen Fluid durch die Rohrleitung fließen. Ist der Fluss des Fluids beendet, so kehrt die Umgebungstemperatur innerhalb kurzer Zeit auf den Ursprungswert zurück, während die Temperatur der Rohrleitung eine längere Zeit dafür benötigt. Dies ermöglicht es, ausgehend von der Temperaturänderung in der Umgebungstemperatur eine Voraussage darüber zu treffen, wie sich die Temperatur der Rohrleitung verändern müsste, wenn der Fluidfluss vollständig versiegt ist. Entspricht die Temperatur der Rohrleitung nicht dieser Vorhersage, so kann angenommen werden, dass ein geringer Fluidfluss weiterhin vorliegt, der sich auf die Temperatur der Rohrleitung auswirkt. Dieser geringe Fluidfluss lässt sich bereits bei geringen Fluidflüssen von wenigen Millilitern Flüssigkeit pro Minute und einer geringen Distanz zwischen den beiden Temperaturmesspunkten detektieren, solange eine der Messungen näher an der Rohrleitung, vorzugsweise mit einer direkten thermischen Kopplung zu der Rohrleitung, durchgeführt wird und die andere Messung weiter weg von der Rohrleitung durchgeführt wird. Hierdurch wird ermöglicht, dass die Sensorvorrichtung mit Temperatursensoren innerhalb eines kompakten Gehäuses angeordnet werden kann. Eine solche kompakte Sensorvorrichtung kann an jedem Punkt eines Rohrleitungssystems angeordnet werden, also auch innerhalb einer Wohnung oder an einer Rohrleitung, die in einem Mehrfamilienhaus von mehreren Verbrauchern geteilt wird. Durch die Detektion von Leckagen basierend auf der Entwicklung der Temperatur über die Zeit ist der Einsatz insbesondere auch in komplexen Topologien mit vielen Verbrauchern möglich, in denen sich ein Equilibrium zwischen den Temperaturen nur selten oder nie einstellt.

In vorteilhafter Weise kann die Auswerteeinrichtung eine, vorzugsweise zur Drahtloskommunikation eingerichtete, Kommunikationseinrichtung umfassen oder mit einer solchen gekoppelt sein. Über eine solche Kommunikationseinrichtung können vorzugweise die Sensordaten zu der entfernten Recheneinheit übermittelt werden, wobei die Kommunikationseinrichtung ausgebildet ist, die Sensordaten an die entfernte Recheneinheit zu übermitteln. Durch das Übermitteln der Sensordaten zur Verarbeitung an die entfernte Recheneinheit kann die Verarbeitung der Sensordaten durch eine entfernte Recheneinheit mit einer hohen Rechenleistung erfolgen. Dies ist effizienter, da die hohe Rechenleistung von verschiedenen Sensorvorrichtungen geteilt werden kann. Zudem sind komplexere Berechnungen und insbesondere der Einsatz von komplexen Maschinenlern-Modellen möglich, was die Genauigkeit des Bestimmens der Fluidflusses verbessert. Zudem wird die Sensorvorrichtung entlastet, so dass die Sensorvorrichtung über längere Zeit mit einer Batterie betrieben werden kann. Hierdurch kann die Sensorvorrichtung auch an Orten eingesetzt werden, an denen ein Stromanschluss nicht zur Verfügung steht.

Alternativ können die Ergebnisse der Erkennung des Fluidflusses durch die lokale Recheneinheit mittels der Kommunikationseinrichtung an ein entferntes Gerät, wie etwa einen Server oder ein Mobilgerät, übermittelt werden. Hierdurch kann ein Nutzer ortsunabhängig über eine Leckage in Kenntnis gesetzt werden.

Die Sensorvorrichtung ist dazu vorgesehen, an der Rohrleitung befestigt zu werden. Dazu kann das Gehäuse vorzugsweise eine Befestigungseinrichtung mit zumindest einer, insbesondere zwei, vorzugsweise schlitzartigen, Öffnung umfassen, um das Gehäuse mittels einer oder mehrerer Befestigungselemente, vorzugsweise Kabelbinder, an der Rohrleitung zu befestigen. Durch die Öffnungen in dem Gehäuse kann eine Befestigung der Sensorvorrichtung ohne Schellen oder ähnliche Bauelemente, die an die Dicke der Rohrleitung angepasst sein müssen, erfolgen. Dies vereinfacht die Nutzung der Sensorvorrichtung mit Rohrleitungen verschiedener Dicke.

Vorzugsweise definiert oder definieren die zumindest eine Öffnung, vorzugsweise die zwei Öffnungen, einen Befestigungsbereich des Gehäuses. Dieser Befestigungsbereich steht im an der Rohrleitung angeordneten Zustand des Gehäuses mit der Rohrleitung in Kontakt. Der zweite Temperatursensor kann innerhalb des Befestigungsbereichs und der erste Temperatursensor außerhalb des Befestigungsbereichs des Gehäuses angeordnet sein. Der Befestigungsbereich zeichnet sich insbesondere durch eine stärkere thermische Kopplung mit der Rohrleitung aus, die zu dem ersten Temperatursensor nicht vorliegt, so dass Änderungen in der Rohrtemperatur sich verstärkt auf die Messungen des zweiten Temperatursensors auswirken und wenn überhaupt allenfalls geringfügig bzw. vernachlässigbar auf die Messungen des ersten Temperatursensors.

Die thermische Kopplung zwischen Rohrleitung und zweitem Temperatursensor kann durch die Nutzung von Wärmeleitelementen verbessert werden. In vorteilhafter Weise kann an dem zweiten Temperatursensor das Wärmeleitelement, vorzugsweise ein Wärmeleitpad, angeordnet sein, um die thermische Kopplung mit der Rohrleitung zu verbessern.

Für eine kompakte und günstige Fertigung der Sensorvorrichtung sind die Temperatursensoren und die Auswerteeinrichtung in erfindungsgemäßer Weise auf einer Leiterplatte angeordnet. Dies ermöglicht die Montage der Sensorvorrichtung mittels Bestückungsautomaten, wodurch die Fertigungskosten gesenkt werden können.

Während die Nutzung einer gemeinsamen Leiterplatte für die Temperatursensoren und die Auswerteeinrichtung Vorteile bezüglich der Fertigung bietet, wirkt eine solche Leiterplatte auch als Wärmeleiter, der die beiden Temperatursensoren miteinander und mit der Auswerteeinrichtung thermisch koppelt. Um die Effekte dieser thermischen Kopplung zu reduzieren, können Ausnehmungen in der Leiterplatte vorgesehen sein, um die jeweiligen Bauelement thermisch voneinander zu entkoppeln. So weist die Leiterplatte in erfindungsgemäßer Weise eine Hauptfläche, auf der die Auswerteeinrichtung angeordnet ist, und zwei Nebenflächen, auf denen jeweils ein Temperatursensor angeordnet ist. Die Leiterplatte weist erfindungsgemäß zwischen den Nebenflächen und der Hauptfläche jeweils eine Ausnehmung auf. Insbesondere können die Nebenflächen lediglich durch Stege mit der Hauptfläche verbunden sein. Hierdurch kann die thermische Kopplung zwischen den Bauteilen reduziert werden, wodurch die Genauigkeit der Bestimmung des Fluidflusses verbessert werden kann.

Um die thermische Kopplung weiter zu verbessern, ist auf der jeweiligen Rückseite der Leiterplatte erfindungsgemäß eine flächige Metallisierung vorgesehen. In anderen Worten ist zumindest einer der Temperatursensoren auf einer ersten Seite der Leiterplatte angeordnet. Weiter erfindungsgemäß weist die Leiterplatte auf einer zweiten, der ersten Seite gegenüberliegenden Seite (d.h. der Rückseite, relativ zu der Vorderseite, an dem der jeweilige Temperatursensor angeordnet ist) zumindest eine flächige Metallisierung auf, die von ihrer lateralen Position mit einer lateralen Position des zumindest einen Temperatursensors übereinstimmt. Hierdurch kann die thermische Kopplung zu der Rohrleitung bzw. zu der Umgebung (im Falle des ersten Temperatursensors) verbessert werden. Insbesondere kann die Wärmeleiteinrichtung an der flächigen Metallisierung angebracht sein.

In vorteilhafter Weise können die Auswerteeinrichtung und die Temperatursensoren so angeordnet sein, dass eine laterale Distanz zwischen der Auswerteeinrichtung und den Temperatursensoren jeweils zumindest 50% (oder zumindest 60%, oder zumindest 70%) einer größten lateralen Ausdehnung des Gehäuses entspricht. Hierdurch kann ein thermischer Einfluss der Auswerteeinrichtung auf die Temperaturmessungen reduziert werden, wodurch die Genauigkeit der Bestimmung des Fluidflusses verbessert werden kann.

Vorteilhafterweise kann die Sensorvorrichtung möglichst autark ausgeführt werden. Insbesondere kann die Sensorvorrichtung mittels einer Batterie mit Energie versorgt werden, so dass sie auch an Orten montiert werden kann, an denen eine Versorgung über ein Stromnetz nicht möglich ist. Beispielsweise kann die Sensorvorrichtung eine Schaltung zum Anschluss einer Batterie umfassen, wobei die Schaltung dazu ausgebildet ist, um elektrische Energie der Batterie für die Temperatursensoren und die Auswerteeinrichtung bereitzustellen. Die Batterie, die eine Einmalbatterie oder eine wiederaufladbare Batterie sein kann, kann ebenfalls in dem Gehäuse angeordnet werden. Insbesondere kann die Sensorvorrichtung ferner die Batterie umfassen. Dies macht die Sensorvorrichtung unabhängig von einer entfernten Stromversorgung, so dass sie auch an schwer zugänglichen Orten montiert werden kann.

Des Weiteren ist eine Recheneinheit offenbart, die genutzt werden kann, um die Sensordaten der Temperatursensoren zu verarbeiten. Die Recheneinheit umfasst eine Schnittstelle zum Erhalten von ersten Sensordaten und von zweiten Sensordaten von der erfindungsgemäßen Sensorvorrichtung. Die ersten Sensordaten repräsentieren Temperaturmessungen an einer ersten Position in und/oder an einem Gehäuse mit einer größeren Distanz zu einer Rohrleitung, insbesondere einer Umgebungstemperatur. Die zweiten Sensordaten repräsentieren Temperatururmessungen an einer zweiten Position in und/oder an dem Gehäuse mit einer kleineren Distanz zu der Rohrleitung, insbesondere einer Oberflächentemperatur der Rohrleitung. Die Recheneinheit umfasst einen Prozessor, der ausgebildet ist, um einen Fluidfluss durch die Rohrleitung basierend auf den ersten Sensordaten und den zweiten Sensordaten zu bestimmen. Dies ermöglicht, wie zuvor ausgeführt, eine Bestimmung eines Fluidflusses selbst bei geringen Flussmengen von wenigen Millilitern pro Minute und zudem die Detektion von Leckagen auch in komplexen Topologien mit vielen Verbrauchern, in denen sich ein Equilibrium zwischen gemessenen Temperaturen nur selten oder nie einstellt. Beispielsweise kann der Prozessor dazu ausgebildet ist, basierend auf einem erkannten Fluidfluss durch die Rohrleitung eine Leckage zu bestimmen. Insbesondere kann der Prozessor dazu ausgebildet sein, basierend auf einem zeitlichen Verlauf der Temperaturmessungen, die zumindest in den ersten Sensordaten enthalten sind, und basierend auf den zweiten Sensordaten einen Fluidfluss durch die Rohrleitung zu bestimmen. Basierend auf dem zeitlichen Verlauf der Temperaturmessungen der Umgebungstemperatur lässt sich die Rohrtemperatur vorhersagen. Stimmt die Rohrtemperatur nicht mit der Vorhersage überein, kann von einer Anomalie ausgegangen werden, die beispielsweise durch eine Leckage ausgelöst sein kann. Dadurch, dass der Verlauf der Temperaturmessungen, und nicht ausschließlich das Einstellen eines Equilibriums zwischen den Temperaturen berücksichtigt wird, kann der Fluidfluss, wie etwa eine Leckage, auch in komplexen Topologien mit vielen Verbrauchern, in denen sich ein Equilibrium zwischen gemessenen Temperaturen nur selten oder nie einstellt, festgestellt werden.

In vorteilhafter Weise kann der Prozessor dazu ausgebildet sein, basierend auf Temperatursteigungen oder Temperaturgefällen innerhalb des zeitlichen Verlaufs der Temperaturmessungen den Fluidfluss durch die Rohrleitung zu bestimmen. Insbesondere kann dabei die Steilheit der Temperatursteigungen oder Temperaturgefälle berücksichtigt werden. Damit haben nicht (nur) die reinen Temperaturunterschiede Einfluss auf die Bestimmung des Fluidflusses, sondern auch Temperaturveränderungen, deren Geschwindigkeit (etwa als erste Ableitung der Temperaturveränderungen) bzw. deren Beschleunigungen (etwa als zweite Ableitung der Temperaturveränderungen). Durch die Berücksichtigung der Temperatursteigungen und Temperaturgefälle kann bereits frühzeitig, d.h. bevor sich ein Equilibrium einstellt, ein Fluidfluss festgestellt werden.

Vorzugsweise kann der Prozessor dazu ausgebildet sein, basierend auf einem zeitlichen Verlauf der Temperaturmessungen an der ersten Position einen vorhergesagten zeitlichen Verlauf der Temperaturmessungen an der zweiten Position zu bestimmen. Der Prozessor kann dazu ausgebildet sein, den vorhergesagten zeitlichen Verlauf der Temperaturmessungen an der zweiten Position mit zumindest einer Temperaturmessung an der zweiten Position zu vergleichen, um einen Fluidfluss durch die Rohrleitung zu bestimmen. Beispielsweise kann ein Fluidfluss, etwa ausgelöst durch eine Leckage, angenommen werden, wenn der Unterschied zwischen dem vorhergesagten zeitlichen Verlauf der Temperaturmessungen an der zweiten Position und den gemessenen Temperaturen an der zweiten Position anzeigt, dass die gemessene Temperatur weniger schnell steigt (oder fällt) als die vorhergesagte Temperatur. **In** anderen Worten kann der Prozessor ausgebildet sein, um eine (positive oder negative) Steigung des vorhergesagten zeitlichen Verlaufs der Temperaturmessungen an der zweiten Position mit einer (positiven oder negativen) Steigung eines gemessenen zeitlichen Verlaufs der Temperaturmessungen an der zweiten Position zu vergleichen, um einen Fluidfluss durch die Rohrleitung zu bestimmen (wobei ein Fluidfluss/eine Leckage vorliegt, wenn die Steigung der Vorhersage größer ist als die Steigung der Messung). Die Bestimmung des Fluidflusses kann somit darauf basieren, zu überprüfen, ob sich die Rohrtemperatur so verhält wie erwartet. Verhält sich der Temperaturverlauf nicht wie erwartet, so liegt möglicherweise eine Leckage vor.

**In** besonders vorteilhafter Weise lässt sich eine Vorhersage des zeitlichen Verlaufs der Temperaturmessungen an der zweiten Position mittels eines Maschinenlern-Modells erreichen. Maschinelles Lernen ist ein Teilgebiet der künstlichen Intelligenz, das die Entwicklung von Algorithmen und Modellen umfasst, die es Computern ermöglichen, zu lernen und Vorhersagen oder Entscheidungen zu treffen, ohne ausdrücklich programmiert zu werden. Der Schwerpunkt liegt dabei auf der Entwicklung von Systemen, die ihre Leistung im Laufe der Zeit durch Lernen aus Daten verbessern können.

Das Training eines maschinellen Lernmodells bezieht sich auf den Prozess, bei dem dem Modell beigebracht wird, genaue Vorhersagen oder Entscheidungen zu treffen. Während des Trainings wird das Modell mit einer großen Menge an Daten konfrontiert, die zur Anpassung der internen Parameter oder Gewichte des Modells verwendet werden. Das Modell lernt aus den Trainingsdaten Muster, Beziehungen oder Regeln, die es ihm ermöglichen, zu verallgemeinern und Vorhersagen für neue, ungesehene Daten zu treffen.

Trainingsdaten sind eine Reihe von Beispielen oder Instanzen, die verwendet werden, um ein Maschinenlern-Modell zu trainieren. Häufig handelt es sich um markierte Daten, d. h. jedes Beispiel ist mit einem bekannten Ergebnis oder Zielwert verknüpft. Die Trainingsdaten bestehen sowohl aus Eingangsmerkmalen als auch aus der entsprechenden Ausgangs- oder Zielvariable. Das Modell lernt aus diesen Daten, indem es die Muster und Beziehungen zwischen den Eingabemerkmalen und der Zielvariablen analysiert. Für das Training des maschinellen Lernmodells können Trainingsalgorithmen wie überwachtes Lernen, halbüberwachtes Lernen, unüberwachtes Lernen oder Verstärkungslernen verwendet werden.

Maschinenlern-Modelle, wie die Maschinenlern-Modelle, das im Rahmen der Erfindung verwendet werden können, werden häufig als künstliche neuronale Netze (ANNs) implementiert, insbesondere als Deep Neural Networks, oder aber als Support Vector Machines, Entscheidungsbaummodelle oder Random Forest-Modelle.

Der Prozessor kann beispielsweise dazu ausgebildet sein, den vorhergesagten zeitlichen Verlauf der Temperaturmessungen an der zweiten Position mittels eines Vorhersage-Maschinenlern-Modells zu bestimmen. Insbesondere kann das Vorhersage-Maschinenlern-Modell ein RNN (ein Rekurrentes Neuronales Netz, etwa ein einfaches Rekurrentes Neuronales Netz, ein RNN mit einem sogenannten Long Short-Term Memory (Langes Kurzzeitgedächtnis), oder ein RNN mit einer Gated Recurrent Unit (Rekurrente Einheit mit Gatter)), oder ein Convolutional Neural Network (Faltendes Neuronales Netz), oder ein neuronales Feedforward-Netzwerk (FNN) sein.

Maschinenlern-Modelle lassen sich zur Verbesserung der Vorhersagegenauigkeit auf die Installationssituation und die daraus resultierenden Temperaturänderungen der jeweiligen Sensorvorrichtung, von der die Sensordaten stammen, anpassen. Dies kann dadurch geschehen, dass das Vorhersage-Maschinenlern-Modell iterativ mittels eines Trainings angepasst wird. Der Prozessor kann dazu ausgebildet sein, um das Vorhersage-Maschinenlern-Modell basierend auf den ersten und zweiten Sensordaten, vorzugsweise mittels Überwachtem Lernen (engl. "supervised learning"), anzupassen. Im vorliegenden Fall kann das Vorhersage-Maschinenlern-Modell genutzt werden, um den zeitlichen Verlauf der Temperaturmessungen an der zweiten Position basierend auf dem zeitlichen Verlauf der Temperaturmessungen an der ersten Position vorherzusagen. Dabei kann der zeitliche Verlauf der Temperaturmessungen an der ersten Position als Eingabedaten verwendet werden und kann der zeitliche Verlauf der Temperaturmessungen an der zweiten Position von dem Modell ausgegeben werden. Um das Vorhersage-Maschinenlern-Modell auf die jeweilige Installationssituation anzupassen, können nun die Parameter (auch Gewichtungen genannt) des Vorhersage-Maschinenlern-Modells solange mittels eines geeigneten mathematischen Verfahrens, wie etwa mittels eines Gradientenverfahrens (engl. gradient descent) solange angepasst werden, bis der vorhergesagte zeitliche Verlauf der Temperaturmessungen an der zweiten Position bei Eingabe des zeitlichen Verlaufs der Temperaturmessungen an der ersten Position möglichst genau dem tatsächlich gemessenen zeitlichen Verlauf der Temperaturmessungen an der zweiten Position entspricht (d.h. solange eine gewisse Verbesserung der Vorhersage festzustellen ist). Dabei können der tatsächlich gemessene zeitliche Verlauf der Temperaturmessungen an der zweiten Position als gewünschte Ausgabe, und der dazu passende gemessene zeitliche Verlauf der Temperaturmessungen an der ersten Position als Eingabe des Supervised Learning-Algorithmus verwendet werden, um das Vorhersage-Maschinenlern-Modell anzupassen. Ausgangslage ist jedoch ein bereits vortrainiertes Maschinenlern-Modell, das basierend auf Temperaturverläufen in verschiedenen Einbausituationen vortrainiert wurde, um die allgemeine Funktionalität des Vorhersage-Maschinenlern-Modells sicherzustellen. Die Anpassung dient dazu, die Vorhersage für den Temperaturverlauf einer Sensorvorrichtung anzupassen. Das Maschinenlern-Modell arbeitet bereits ohne eine spätere Anpassung an die Einbausituation nicht mit festen (definierten) Schwellwerten, sondern mit dynamischen (gelernten) Schwellwerten. In jedem Haus, bzw. bei jeder Installation können diese anders sein und können durch die Anpassung des Maschinenlern-Modells gelernt werden. Insofern kann die Anpassung des Maschinenlern-Modells auch als Kalibrierung bezeichnet werden, wenngleich im Idealfall nicht als einmalige Kalibrierung. Diese Form der Kalibrierung kann in mehreren Stufen (Intervallen) immer wieder erfolgen, da das Modell immer weiter lernt, indem neue Daten in das Lernen einbezogen werden.

**In** manchen Fällen, insbesondere wenn die Recheneinheit eine entfernte Recheneinheit zur Verarbeitung von Sensordaten verschiedener Sensorvorrichtungen ist, bedeutet eine solche Anpassung des Vorhersage-Maschinenlern-Modells, dass für jede Sensorvorrichtung ein separates Vorhersage-Maschinenlern-Modell verwendet wird. Daraus ergibt sich, dass, geht man davon aus, dass die Sensordaten in regelmäßigen Abständen empfangen werden, eine Vielzahl von Vorhersage-Maschinenlern-Modellen gleichzeitig im Speicher der Recheneinheit gehalten werden müssen oder aber in den Speicher geladen werden müssen, was eine große Anforderung an die Menge an verfügbarem Speicher und die Ladearchitektur stellt. Um diesen Aufwand zu reduzieren, kann das Vorhersage-Maschinenlern-Modell zwei Komponenten umfassen - ein erstes Grund-Modell, das für alle Vorhersagen verwendet wird und bei der Anpassung nicht verändert wird, und ein nachgeschaltetes Verfeinerungs-Modell, das auf die Sensordaten einer bestimmten Sensorvorrichtung angepasst wird. Dabei kann das Grund-Modell, angenommen das Vorhersage-Maschinenlern-Modell wird als Deep Neural Network (DNN, ein Neuronales Netzwerk mit einem oder mehreren versteckten Schichten zusätzlich zu einer Eingabeschicht und einer Ausgabeschicht) eine größere Anzahl von Schichten umfassen (etwa die Eingabeschicht und eine oder mehrere versteckte Schichten) als das Verfeinerungs-Modell (etwa die Ausgabeschicht oder eine oder mehrere versteckte Schichten und die Ausgabeschicht). Diese beiden Modelle können dann miteinander verschaltet werden, um die Vorhersage basierend auf dem zeitlichen Verlauf der Temperaturmessungen an der ersten Position auszugeben.

Die Ausgabe des Vorhersage-Maschinenlern-Modells ist der vorhergesagte zeitliche Verlauf der Temperaturmessungen an der zweiten Position. Dies kann dadurch erreicht werden, dass das Vorhersage-Maschinenlern-Modell ein Zeitreihen-Vorhersage-Maschinenlern-Modell und/oder ein Regressions-Maschinenlern-Modell ist. In beiden Fällen wird auf der Grundlage einer Reihe von vorherigen Temperaturmessungen (an der ersten Position) der Verlauf der Temperaturen an der zweiten Position vorhergesagt, etwa für einen einzelnen Zeitschritt (der dann mit den Vorhersagen für andere Zeitschritte kombiniert wird, um den Temperaturverlauf zu erhalten) oder gleich für eine Sequenz von Zeitschritten.

Alternativ oder zusätzlich zur Vorhersage des Verlaufs kann die Bestimmung, ob ein Fluidfluss (und damit ggf. auch eine Leckage) vorliegt, als Klassifikationsproblem betrachtet werden. Somit kann der Prozessor dazu ausgebildet sein, mittels eines Klassifikations-Maschinenlern-Modells basierend auf den ersten und zweiten Sensordaten einen Fluidfluss durch die Rohrleitung, und insbesondere das Vorliegen einer Leckage, zu bestimmen. Insbesondere kann das Klassifikations-Maschinenlern-Modell darauf trainiert sein, basierend auf einem zeitlichen Verlauf der Temperaturmessungen, die zumindest in den ersten Sensordaten enthalten sind, und basierend auf den zweiten Sensordaten (etwa einem aktuellen Wert der Temperaturmessung oder einem Verlauf der Temperaturmessungen an der zweiten Position) eine Klassifikation über einen Fluidfluss durch die Rohrleitung auszugeben. Dazu kann das Klassifikations-Maschinenlern-Modell mittels Supervised Learning, trainiert sein, um basierend auf ersten und zweiten Sensordaten von Sensorvorrichtungen und entsprechenden Labels, ob ein Fluidfluss / eine Leckage den jeweiligen Temperaturverläufen zugrunde liegt, eine Klassifikation auszugeben, ob ein Fluidfluss, wie etwa eine Leckage, vorliegt.

In einigen Ausführungsformen der Erfindung basiert die Bestimmung des Fluidflusses auf einem Verlauf der jeweiligen Temperaturen. Diese Verläufe werden dem jeweils verwendeten Modell als Eingabe bereitgestellt. Dabei kann das jeweilige Modell in einer ersten Variante zustandslos agieren, d.h. in der Vergangenheit gemachte Eingaben in das Modell haben keinen Einfluss auf eine aktuelle Ausgabe des Modells, die Ausgabe hängt lediglich von der aktuellen Eingabe und den Modellparametern ab. In diesem Fall kann der Prozessor dazu ausgebildet sein, dem jeweiligen Maschinenlern-Modell den zeitlichen Verlauf der Temperaturmessungen, die zumindest in den ersten Sensordaten enthalten sind (etwa einen Ausschnitt, ein sogenanntes Window, davon), als aktuelle Eingabedaten bereitzustellen. Diese Vorgehensweise bietet sich insbesondere an, wenn die Recheneinheit eine entfernte Recheneinheit ist, die die Sensordaten vieler Sensorvorrichtungen verarbeitet, da die Sensordaten in diesem Fall mittels einer Lastverteilung problemlos auf unterschiedliche entfernte Recheneinheiten verteilt werden können.

Alternativ kann das jeweilige Modell sich den Verlauf merken, so dass jeweils nur der Temperaturmesswert oder die Temperaturmesswerte eines Zeitschritts als Eingabe genutzt werden. Dabei kann das jeweilige Maschinenlern-Modell eine Speicherkomponente, vorzugsweise ein Rekurrentes Neuronales Netzwerk, beispielsweise ein Long Short-Term Memory, umfassen, um den zeitlichen Verlauf der Temperaturmessungen, die zumindest in den ersten Sensordaten enthalten sind, im Speicher zu halten. Rekurrente Neuronale Netzwerke, wie etwa Long Short Term Memories oder Gated Recurrent Units verfügen über Mechanismen, um vorherige Eingaben zu gewichten und, in abstrahierter Form, als zusätzlichen internen Zustand zu nutzen, der die aktuelle Ausgabe zu beeinflussen.

Eine Möglichkeit, um zu bestimmen, ob ein Fluidfluss durch eine Rohrleitung vorliegt, liegt in der Bestimmung eines Gleichgewichtszustands zwischen verschiedenen Temperaturmessungen. Während das vorgeschlagene Konzept insbesondere darauf basiert, anhand der Temperaturänderungen an beiden Positionen in oder an dem Gehäuse einen Fluidfluss, wie etwa eine Leckage zu bestimmen, kann die Bestimmung des Fluidflusses (zusätzlich) auch auf der Ermittlung eines Gleichgewichtszustands (Equilibriums) basieren. Dabei kann insbesondere ein virtuelles Equilibrium definiert bzw. gelernt werden. Das ist für ein Wasserrohr-System relevant, welches keine absoluten Gleichgewichtszustände aufweist. Beispielsweise kann ein dauerhafter (bekannter/akzeptierter) Wasserfluss dazu führen, dass ein "virtuelles Equilibrium" schon erreicht ist, wenn der Temperaturunterschied konstant (beispielsweise) 1,2°C ausweist. Das ist auch Teil des Lernens des Modelles. So kann beispielsweise in einem Ideal-Haus das Equilibrium mit 0°C Temperaturdifferenz definiert werden, in einem Haus, welches einen gewissen akzeptierten Wasserfluss hat und bei dem es immer eine Mindest-Temperaturdifferenz von 1,2°C gibt, jedoch ein "Virtuelles-Equilibrium" definiert werden, welches Gleichwertig mit einem echten Equilibrium ist. Der Prozessor kann beispielsweise dazu ausgebildet sein, basierend auf einem zeitlichen Verlauf der Temperaturmessungen einen konstanten Temperaturunterschied zwischen den gemessenen Temperaturen an der ersten Position und an der zweiten Position zu bestimmen (der auch 0°C betragen kann in einem idealen Haus, oder um zumindest 0,1°C (oder zumindest 0,2°C, oder zumindest 0,5°C) von 0°C verschieden sein kann). Basierend auf diesem konstanten Temperaturunterschied und basierend auf aktuellen Temperaturmessungen kann nun ein "virtueller" Gleichgewichtszustand ermittelt werden. Ein Fluidfluss durch die Rohrleitung kann nun basierend darauf bestimmt werden, ob solch ein "virtueller" Gleichgewichtszustand vorliegt. Insbesondere wenn sich ein solcher Gleichgewichtszustand nicht eintritt kann ein Fluidfluss, und damit eine Leckage, vorliegen.

Bisher hat sich die Bestimmung des Fluidflusses darauf konzentriert, herauszufinden, ob aktuell ein Fluidfluss vorliegt. Ein solcher Fluidfluss kann beispielsweise auf eine Leckage hindeuten, wenn er über einen längeren Zeitpunkt andauert. Um zusätzlich dazu zu bestimmen, wann ein Fluidfluss vorliegt, kann auch die Menge des Fluidflusses geschätzt werden. So kann der Prozessor dazu ausgebildet sein, basierend auf einem zeitlichen Verlauf der Temperaturmessungen, die zumindest in den zweiten Sensordaten enthalten sind, vorzugsweise mittels eines Regressions-Maschinenlern-Modells, den Volumenstrom des durch die Rohrleitung fließenden und/oder geflossenen Fluids zu schätzen. Dazu kann das Regressions-Maschinenlern-Modells mittels Supervised Learning trainiert werden, um basierend auf dem zeitlichen Verlauf der Temperaturmessungen eine Schätzung für die Menge des Fluidflusses auszugeben. Dies kann wieder dadurch geschehen, dass als Trainings-Eingabedaten der gemessene zeitliche Verlauf der Temperaturmessungen an der zweiten Position, und optional der gemessene zeitliche Verlauf der Temperaturmessungen an der ersten Position, und als erwünschte Ausgabedaten die dazu korrespondierende Menge des Fluidflusses zum Training verwendet wird.

In manchen Ausführungsformen der Erfindung kann die Sensorvorrichtung die Recheneinheit als lokale Recheneinheit umfassen. Dies ermöglicht die lokale Bestimmung des Fluidflusses, ohne dass Daten übermittelt werden müssen. Eine Warnung über eine Leckage kann beispielsweise über einen Lautsprecher der Sensorvorrichtung ausgegeben werden.

In einer alternativen Ausführungsform kann ein System die Sensorvorrichtung und die Recheneinheit umfassen, wobei die Recheneinheit eine entfernte Recheneinheit ist, die separat von der Sensorvorrichtung angeordnet ist. Diese Variante ermöglicht eine verbesserte Verarbeitung der Sensordaten, da die entfernte Recheneinheit mit mehr Rechenleistung ausgestattet sein kann, da sie nicht auf einen Batteriebetrieb angewiesen ist und von vielen Nutzern geteilt wird.

Ein weiterer Aspekt der vorliegenden Erfindung bezieht sich auf ein entsprechendes Verfahren zum Bestimmen eines Fluidflusses durch eine Rohrleitung, insbesondere zur Leckageerkennung unter Nutzung einer erfindungsgemäßen Sensorvorrichtung und einer erfindungsgemäßen Recheneinheit. In Bezug auf das Verfahren wird die Aufgabe durch die Merkmale des Anspruchs 15 gelöst. Das Verfahren umfasst ein Erhalten von ersten Sensordaten eines ersten Temperatursensors. Das Verfahren umfasst ein Erhalten von zweiten Sensordaten eines zweiten Temperatursensors, wobei der erste Temperatursensor eine größere Distanz von der Rohrleitung aufweist als der zweite Temperatursensor. Das Verfahren umfasst ein Bestimmen eines Fluidflusses durch die Rohrleitung basierend auf den ersten und zweiten Sensordaten.

Das Verfahren wird erfindungsgemäß mittels der erfindungsgemäßen Sensorvorrichtung und der beschriebenen Recheneinheit implementiert. Merkmale, die im Zusammenhang mit der Sensorvorrichtung und der Recheneinheit (sowie einem System aus der Sensorvorrichtung und der Recheneinheit) beschrieben wurden, können auch Teil des entsprechenden Verfahrens sein. Insbesondere kann das Verfahren diejenige Funktionalität umfassen, die von der Schnittstelle und/oder dem Prozessor der Recheneinheit bereitgestellt wird.

Es gibt nun verschiedene Möglichkeiten, die Lehre der vorliegenden Erfindung in vorteilhafter Weise auszugestalten und weiterzubilden. Dazu ist einerseits auf die den unabhängigen Ansprüchen nachgeordneten Ansprüche und andererseits auf die nachfolgende Erläuterung bevorzugter Ausführungsbeispiele der Erfindung anhand der Zeichnung zu verweisen. **In** Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: zeigt eine schematische Zeichnung einer Sensorvorrichtung zum Bestimmen eines Fluidflusses durch eine Rohrleitung, insbesondere zur Leckageerkennung, die optional mit einer entfernten Recheneinheit gekoppelt ist;
- Fig. 2: zeigt eine schematische Zeichnung einer entfernten oder lokalen Recheneinheit;
- Fig. 3: zeigt eine schematische Zeichnung einer Sensorvorrichtung, die an einer Rohrleitung angeordnet ist;
- Fig. 4a bis 4d: zeigen Diagramme eines Zusammenhangs zwischen Temperaturmessungen und Temperaturvorhersagen einer Sensorvorrichtung;
- Fig. 5: zeigt eine Leiterplatte einer Sensorvorrichtung;
- Fig. 6: zeigt eine Sensorvorrichtung mit Leiterplatte und Gehäuse; und
- Fig. 7: zeigt ein Flussdiagramm eines Verfahrens zum Bestimmen eines Fluidflusses durch eine Rohrleitung, insbesondere zur Leckageerkennung.

Die vorliegende Erfindung befasst sich mit einer Technologie zur Detektion Fluidfluss in Rohrleitungen, und insbesondere mit der Detektion von Leitungswasserleckagen.

Die Erfindung stellt einen Sensor zur Erkennung von Wasserlecks und zur Überwachung des Wasserverbrauchs in Echtzeit bereit. Die Sensorvorrichtung, die als Gerät des Internets der Dinge (engl. Internet of Things, IoT) ausgebildet sein kann, kann mittels moderner Sensorik und Telekommunikationshardware nutzen, um Wasserflussdaten zu messen und entweder lokal zu verarbeiten oder einen entfernten Server (d.h. eine entfernte Recheneinheit) zur Verarbeitung zu übermitteln. Die Sensordaten können, insbesondere auf dem Server, mittels Künstlicher Intelligenz analysiert werden. Das System aus Sensor und KI-basierter Analyse durch eine lokale oder entfernte Recheneinheit kann selbst Lecks mit einem geringen Wasserfluss identifizieren. Sobald eine Unregelmäßigkeit festgestellt wird, kann das System eine Benachrichtigung aussenden, damit schnell reagiert werden kann.

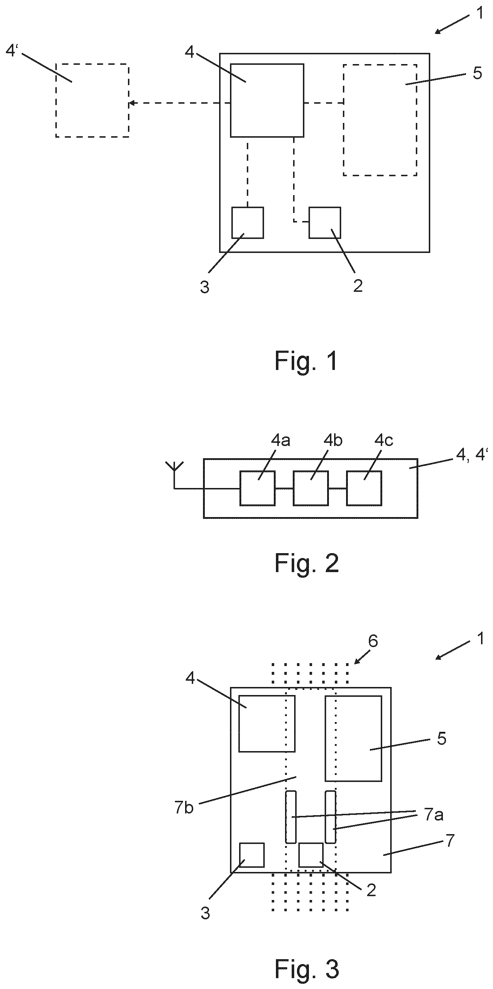

Eine erste Komponente der Erfindung stellt eine Sensorvorrichtung 1 dar. Fig. 1 zeigt eine schematische Zeichnung einer solchen Sensorvorrichtung 1 zum Bestimmen eines Fluidflusses durch eine Rohrleitung 6 (in Fig. 3 gezeigt), insbesondere zur Leckageerkennung, die optional mit einer entfernten Recheneinheit 4' gekoppelt ist. Diese Sensorvorrichtung 1 umfasst zwei Temperatursensoren (Temperaturmesser) 2, 3. Einer der beiden Temperatursensoren kann, wie neben Fig. 1 auch in Fig. 3, 5 und 6 gezeigt ist, horizontal mittig positioniert werden und die Rohrtemperatur messen (Temperatursensor 2, im Folgenden auch zweiter Temperatursensor genannt) und in Form zweiter Sensordaten bereitstellen. Der andere Temperatursensor (Temperatursensor 3, im Folgenden auch erster Temperatursensor genannt) kann dagegen nicht mittig positioniert sein und die Umgebungstemperatur messen und in Form erster Sensordaten bereitstellen. Insbesondere sind die Temperatursensoren 2, 3 derart in und/oder an einem Gehäuse 7 zur Anordnung an der Rohrleitung 6 (siehe Fig. 3) angeordnet, dass im an der Rohrleitung 6 befestigten Zustand des Gehäuses 7, der erste Temperatursensor 3 eine größere Distanz zu der Rohrleitung 6 aufweist als der zweite Temperatursensor 2.

Die Temperatursensoren 2, 3 messen die Temperatur des Raumes und eines Objekts, wie eines Rohres, das seine Temperatur ändert, wenn ein Medium (z.B. Wasser) hindurchfließt. Die Sensorvorrichtung 1 umfasst ferner einen Prozessor und eine Sendeeinheit (beides als Auswerteeinrichtung 4 in Fig. 1, 3, 5 und 6 gezeigt). Diese Komponenten 4 sind mit den Temperatursensoren 2, 3 gekoppelt, verarbeiten die Messdaten (Sensordaten) und übermitteln Informationen, etwa an die entfernte Recheneinheit 4'. Die Sensorvorrichtung 1 umfasst ferner eine Stromversorgung. Beispielsweise kann eine Batterie 5 die Sensorvorrichtung 1 mit der benötigten Energie versorgen, was sie unabhängig von Stromnetzen macht.

Die Analyse der Sensordaten wird von der Auswerteeinrichtung 4 durchgeführt. Diese ist dazu ausgebildet, um a) als lokale Recheneinheit 4 erste Sensordaten des ersten Temperatursensors 3 und zweite Sensordaten des zweiten Temperatursensors 2 zu verarbeiten und/oder um b) die ersten und zweiten Sensordaten der entfernten Recheneinheit 4' zur Verarbeitung zu übermitteln, um einen Fluidfluss durch die Rohrleitung 6 zu bestimmen. Es ist ersichtlich, dass zwei Varianten möglich sind - in einer ersten Variante findet die Verarbeitung der Sensordaten lokal statt. In dieser Variante umfasst die Auswerteeinrichtung 4 eine Recheneinheit als lokale Recheneinheit. Alternativ (oder zusätzlich) kann die Verarbeitung der Sensordaten in einer zweiten Variante durch die entfernte Recheneinheit 4' erfolgen, etwa durch einen Server in der Cloud. Diese entfernte Recheneinheit 4' bildet ein System mit der Sensorvorrichtung 1. Um die Sensordaten an die entfernte Recheneinheit 4' zu übermitteln, umfasst die Auswerteeinrichtung 4 eine, vorzugsweise zur Drahtloskommunikation eingerichtete, Kommunikationseinrichtung oder ist mit einer solchen gekoppelt. In der ersten Variante kann eine solche Kommunikationseinrichtung auch genutzt werden, um Informationen über die Bestimmung des Fluidflusses an den Nutzer zu übermitteln, etwa über einen Server oder direkt an ein Endgerät des Nutzers. Die Kommunikationseinrichtung kann beispielsweise zur Kommunikation über zumindest eines von lokales Drahtlosnetzwerk (Wireless Local Area Network, WLAN), Bluetooth (eine Marke der Bluetooth SIG), ZigBee (eine Marke der Connectivity Standards Alliance), DECT (eine Marke des European Telecommunications Standards Institute) oder ein anderes Drahtloskommunikationsprotokoll, oder aber über Ethernet ausgebildet sein.

Die eigentliche Bestimmung des Fluidflusses wird durch eine Recheneinheit durchgeführt, sei es lokal oder entfernt durch einen Server. Fig. 2 zeigt eine schematische Zeichnung einer entfernten oder lokalen Recheneinheit 4, 4'. Die Recheneinheit 4, 4' umfasst eine Schnittstelle 4a zum Erhalten von ersten Sensordaten und von zweiten Sensordaten, vorzugsweise von der Sensorvorrichtung 1. Diese Schnittstelle 4a kann, in der Ausgestaltung als lokale Recheneinheit, eine Schnittstelle zur drahtgebundenen Kommunikation mit den Temperatursensoren 2, 3 sein. Somit kann die Schnittstelle 4a ausgebildet sein, um die Sensordaten über einen lokalen Datenbus (wie etwa I²C) zu erhalten. In der Ausgestaltung als entfernte Recheneinheit kann die Schnittstelle 4a eine Schnittstelle zur Kommunikation über ein Computernetzwerk, etwa zur Kommunikation über das Internet sein, etwa eine Ethernet-Schnittstelle. Die Recheneinheit 4, 4' umfasst ferner einen Prozessor 4b, etwa zumindest einen Mikroprozessor, zumindest einen Digitalen Signalprozessor (DSP), oder zumindest einen FPGA (Field-Programmable Gate Array). Die Recheneinheit 4, 4' umfasst ferner einen Speicher 4c. Der Speicher 4c kann ein flüchtiger oder ein nicht-flüchtiger Speicher sein und maschinenlesbare Instruktionen umfassen, die von den Prozessor 4b ausgeführt werden, um die Funktionalität des Prozessors 4b bereitzustellen. Zudem kann der Speicher 4c zumindest ein Maschinenlern-Modell umfassen, das von dem Prozessor 4b zur Bestimmung des Fluidflusses genutzt werden kann. Beispielsweise kann die Recheneinheit 4, 4' eine Beschleunigungsschaltung, wie etwa einen Grafikprozessor (nicht gezeigt), umfassen, der von dem Prozessor 4b zur Bestimmung des Fluidflusses mittels des Maschinenlern-Modells genutzt wird. Der Prozessor 4b ist mit den Schnittstelle 4a und mit dem Speicher 4c gekoppelt. Der Prozessor 4b erhält die Sensordaten und verarbeitet sie, um den Fluidfluss zu bestimmen. Insbesondere ist der Prozessor 4b dazu ausgebildet, über die Schnittstelle 4a die ersten und zweiten Sensordaten zu erhalten. Der Prozessor 4b ist zudem dazu ausgebildet, um den Fluidfluss durch die Rohrleitung 6 basierend auf den ersten Sensordaten und den zweiten Sensordaten zu bestimmen.

Die vorliegende Erfindung basiert darauf, dass die Sensordaten an unterschiedlichen Positionen im Gehäuse 7, und insbesondere mit unterschiedlichen Distanzen zu der Rohrleitung 6 gewonnen werden. So repräsentieren die ersten Sensordaten Temperaturmessungen (durch den ersten Temperatursensor 3) an einer ersten Position in und/oder an dem Gehäuse 7 mit einer größeren Distanz zu der Rohrleitung 6, insbesondere Temperaturmessungen einer Umgebungstemperatur. Die zweiten Sensordaten repräsentieren Temperatururmessungen (durch den zweiten Temperatursensor 2) an einer zweiten Position in und/oder an dem Gehäuse 7 mit einer kleineren Distanz zu der Rohrleitung 6, insbesondere Temperaturmessungen einer Oberflächentemperatur der Rohrleitung 6. Dies ist in Fig. 3 gezeigt.

Fig. 3 zeigt eine schematische Zeichnung einer Sensorvorrichtung 1, die an einer Rohrleitung 6 angeordnet ist. Zwar ist in der vorliegenden Anmeldung stets von einer Rohrleitung 6 die Rede, das erfindungsgemäße Konzept ist jedoch auf alle Objekte anwendbar, die ihre Temperaturen verändern, wenn ein Medium (wie etwa Wasser) durch das Objekt fließt oder bewegt wird. Fig. 3 zeigt den Sensorvorrichtung 1 mit einem Gehäuse 7 und die Anordnung der Komponenten in dem Gehäuse 7. Insbesondere zeigt Fig. 3 den horizontal mittig positionierten zweiten Temperatursensor 2 zur Messung der Rohrtemperatur und den nicht mittig positionierten ersten Temperatursensor 3 zur Messung der Raumtemperatur. Das Gehäuse 7 umfasst zwei schlitzartige Öffnungen (Befestigungsschlitze) 7a zur automatischen Positionierung des Sensors. Mittels Kabelbindern, die durch die Befestigungsschlitze 7a und um die Rohrleitung 6 geführt werden, kann das Gehäuse 7 an der Rohrleitung 6 befestigt werden. Die mittig platzierten Schlitze 7a für die Kabelbinder ermöglichen eine einfache und flexible Installation der Sensorvorrichtung 1 an verschiedenen Objekten und Orten.

Die Befestigungsschlitze 7a liegen der Rohrleitung 6 gegenüber und definieren einen Befestigungsbereich 7b des Gehäuses 7, der, sofern das Gehäuse 7 an der Rohrleitung 6 befestigt ist, mit der Rohrleitung 6 in Kontakt steht. Der zweite Temperatursensor 2, der die Rohrleitungstemperatur misst, ist innerhalb des Befestigungsbereichs 7a angeordnet, der erste Temperatursensor 3 jedoch außerhalb. Somit ist der zweite Temperatursensor 2 in einem Bereich 7b des Gehäuses 7 angeordnet, der mit der Rohrleitung 6 in Kontakt steht, der erste Temperatursensor 3 jedoch einem Bereich des Gehäuses 7, der mit der Rohrleitung 6 nicht in Kontakt steht. Da das Gehäuse 7 jedoch einteilig ausgebildet ist, ist eine thermische Kopplung zwischen der Rohrleitung 6 und dem ersten Temperatursensor 3 nicht gänzlich zu vermeiden. Insofern kann lediglich durch die geringere Distanz zwischen dem zweiten Temperatursensor 2 und der Rohrleitung 6 und durch weitere Maßnahmen, wie etwa ein Wärmeleitpad, bewirkt werden, dass die thermische Kopplung zwischen der Rohrleitung 6 und dem zweiten Temperatursensor 2 größer ist als die thermische Kopplung zwischen der Rohrleitung 6 und dem ersten Temperatursensor 3.

Die beiden Temperatursensoren 2, 3 sind zudem möglichst weit von der Auswerteeinrichtung 4 entfernt, um zu verhindern, dass die Wärmeabstrahlung der Auswerteeinrichtung 4 die Messung über Gebühr verzerrt. Insbesondere können die Auswerteeinrichtung 4 und die Temperatursensoren 2, 3 an unterschiedlichen Enden des Gehäuses 7 angeordnet sein, so dass eine laterale Distanz zwischen der Auswerteeinrichtung 4 und den Temperatursensoren 2, 3 jeweils zumindest 50% (oder zumindest 60%) einer größten lateralen Ausdehnung des Gehäuses 7 (d.h. der Länge/Höhe des Gehäuses 7) entspricht.

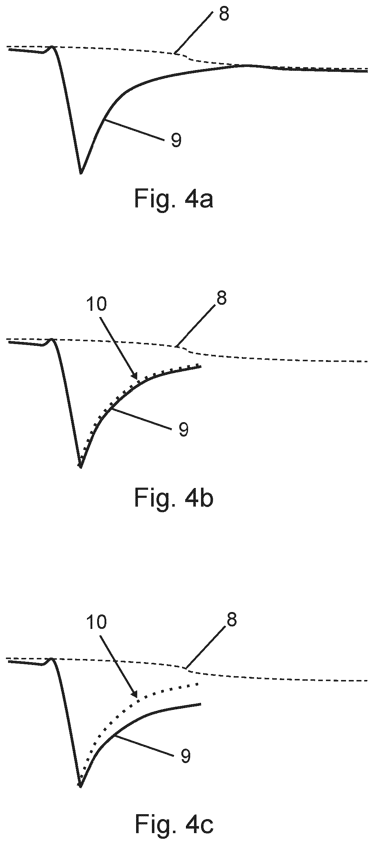

Die Bestimmung des Fluidflusses, und die Detektion von Leckagen, wird durch die jeweilige Recheneinheit 4, 4' durchgeführt. Dabei können die folgenden Zusammenhänge zwischen den gemessenen und ggf. vorhergesagten Temperaturverläufen berücksichtigt werden, die in Fig. 4a bis 4d gezeigt sind. Fig. 4a bis 4d zeigen Diagramme eines Zusammenhangs zwischen Temperaturmessungen und Temperaturvorhersagen einer Sensorvorrichtung 1. In den Fig. 4a bis 4d zeigt Kurve 8 die gemessene Umgebungstemperatur, Kurve 9 die gemessene Rohrtemperatur, und Kurve 10 zeigt eine vorhersagte Rohrtemperatur.

Erstens kann die Recheneinheit 4, 4' den Fluidfluss basierend auf einem Gleichgewichtszustand (Equilibrium) bestimmen. In Fig. 4a ist gezeigt, wie sich die Kurven 8, 9 und 10 in diesem Fall entwickeln. Wenn die Temperatur 9 des Rohres die Raumtemperatur 8 erreicht, wird ein Gleichgewichtszustand (Equilibrium) angenommen, der darauf hinweist, dass kein Wasser fließt und keine Leckage vorliegt.

Zusätzlich wird jedoch überprüft, wie sich die zeitlichen Verläufe der Umgebungstemperatur und der Rohrtemperatur zueinander verhalten. So kann der Prozessor 4b basierend auf Temperatursteigungen oder Temperaturgefällen innerhalb des zeitlichen Verlaufs der Temperaturmessungen den Fluidfluss durch die Rohrleitung 6 bestimmen. Daher ist der Prozessor 4b dazu ausgebildet, basierend auf einem zeitlichen Verlauf der Temperaturmessungen, die zumindest in den ersten Sensordaten, und optional auch in den zweiten Sensordaten, enthalten sind, und basierend auf den zweiten Sensordaten einen Fluidfluss durch die Rohrleitung 6 zu bestimmen. Insbesondere kann anhand des Temperaturverlaufs der gemessenen Umgebungstemperatur vorhergesagt werden, wie sich die Temperaturmessungen der Rohrtemperatur entwickeln werden. Der Prozessor 4b kann dann den vorhergesagten zeitlichen Verlauf der Temperaturmessungen an der zweiten Position mit zumindest einer Temperaturmessung an der zweiten Position vergleichen, um einen Fluidfluss durch die Rohrleitung 6 zu bestimmen. Wenn die real gemessene Temperaturkurve 9 (etwa einer Aufwärm- oder einer Abkühlkurve) wie in Fig. 4b mit der vom Algorithmus vorhergesagten Temperaturkurve 10 übereinstimmt, wird ebenfalls kein Leck angenommen. Eine weniger steile als die vorhergesagte Temperaturkurve (Aufwärmkurve oder Abkühlkurve) deutet jedoch auf eine Leckage hin, wobei die Recheneinheit Differenziale, Derivate und andere relevante Metriken nutzen kann, um eine genaue Diagnose zu stellen.

Zur Vorhersage des zeitlichen Verlaufs der Temperaturmessungen an der zweiten Position kann der Prozessor 4b ein Vorhersage-Maschinenlern-Modell einsetzen. Insbesondere ein Zeitreihen-Vorhersage-Maschinenlern-Modell oder ein Regressions-Maschinenlern-Modell kann genutzt werden, um den zeitlichen Verlauf der Temperaturmessungen an der zweiten Position vorauszusagen. Dabei wird der zeitliche Verlauf der Temperaturmessungen an der ersten Position als Eingabewerte für das jeweilige Vorhersage-Maschinenlern-Modell genutzt, und der zeitliche Verlauf der Temperaturmessungen an der zweiten Position wird als Ausgabewert ausgegeben. Von dem vorhergesagten und dem gemessenen Verlauf der Temperaturmessungen an der zweiten Position können nun die relevanten Metriken, wie etwa die Differenziale und Derivate, berechnet werden, um zu bestimmen, wie sich die beiden Verläufe zueinander verhandeln. Ist die Kurve des gemessenen Verlaufs weniger steil als die Kurve des vorhergesagten Verlaufs, kann dies auf eine Leckage hindeuten.

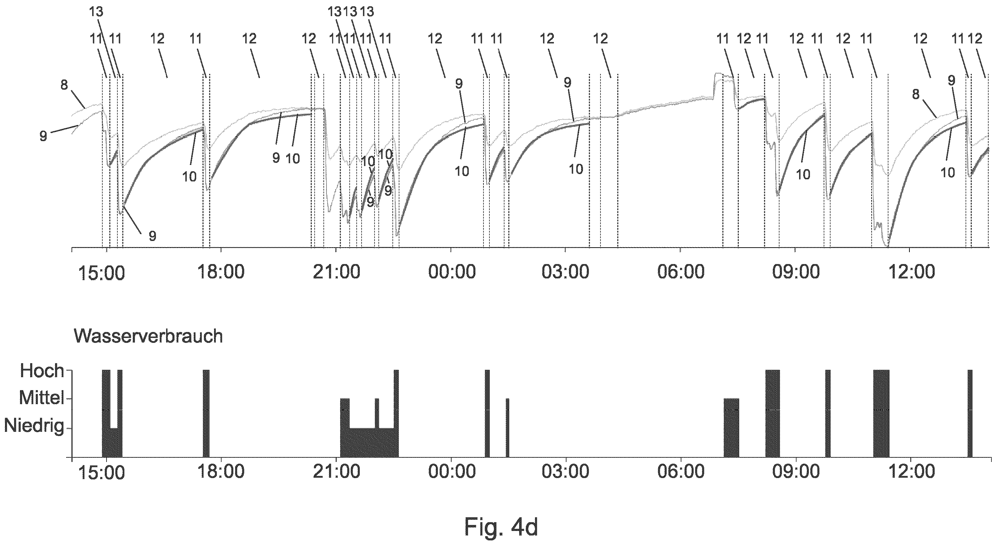

In Fig. 4d ist nun gezeigt, wie sich die gemessene Umgebungstemperatur 8, die gemessene Rohrtemperatur 9 und die vorhergesagte Rohrtemperatur 10 relativ zueinander verhalten, und welche Schlüsse daraus gezogen werden. Im unteren Teil des Diagramms ist der reale Wasserverbrauch gezeigt, im oberen Teil die Auswirkungen des Wasserverbrauchs auf die Temperaturkurven 8, 9, 10. Der obere Teil des Diagramms ist zudem in Abschnitte unterteilt, die das Ergebnis der Leckagedetektion darstellen. Dabei wird zwischen den Abschnittstypen Wasserverbrauch 11, unauffälliger Bereich 12 und mögliche Leckage 13 unterschieden. Insbesondere um 15:00 sowie zwischen 21:00 und 22:30 kommt es wiederholt zu Fällen, in denen die vorhergesagte Temperaturentwicklung 10 eine steilere Kurve ergibt, als die tatsächlich gemessene Temperaturentwicklung 9, was auf eine Leckage hindeutet. Lediglich zwischen 20:00 und 21:00 und zwischen 03:30 und 07:00 stellt sich ein Equilibrium zwischen den Temperaturkurven ein. In den übrigen Zeiträumen ist allein anhand des Gleichgewichts nicht zu erkennen, ob eine Leckage vorliegt oder nicht.

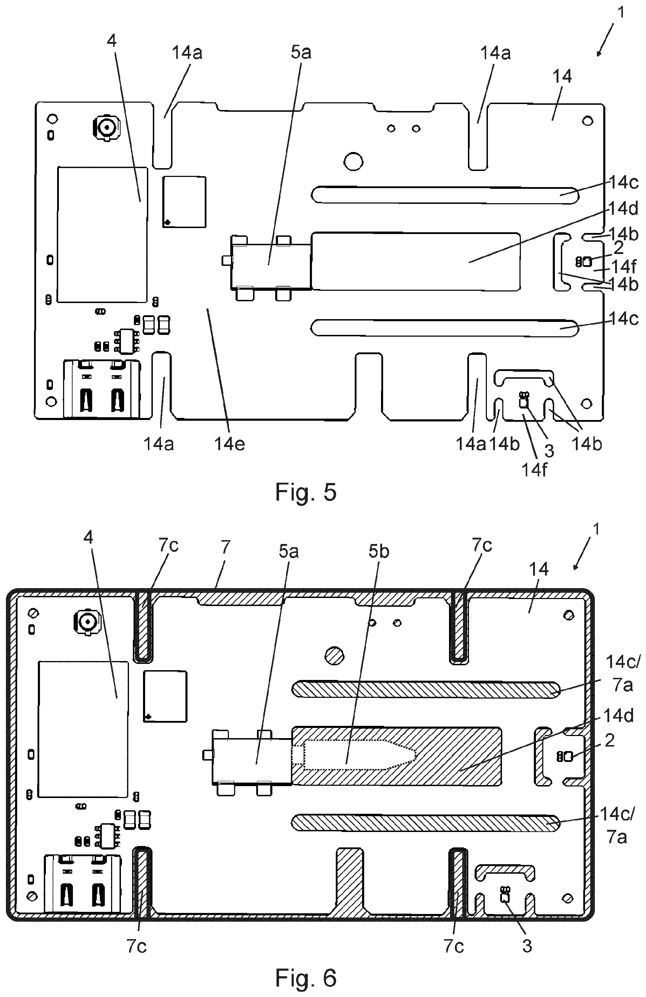

In manchen Implementierungen können die Komponenten der Sensorvorrichtung 1 auf einer Leiterplatte 14 angeordnet sein und über diese miteinander gekoppelt sind. Fig. 5 zeigt eine solche Leiterplatte 14 einer Sensorvorrichtung 1 mit den Temperatursensor 2, 3, der Auswerteeinrichtung 4 sowie einer Schaltung 5a zum Anschluss einer Batterie. Durch die Leiterplatte 14 werden die Komponenten jedoch nicht nur logisch, sondern auch thermisch miteinander gekoppelt. Daher kann die Leiterplatte 14 in unterschiedliche Teilbereiche unterteilt werden, etwa in eine Hauptfläche 14e, auf der die Auswerteeinrichtung 4 angeordnet ist, und zwei Nebenflächen 14f, auf denen jeweils ein Temperatursensor 2, 3 angeordnet ist. Die thermische Kopplung wird dadurch verringert, dass die Leiterplatte 14 Aussparungen (Ausnehmungen) 14b zwischen der Hauptfläche 14e und den Nebenflächen 14f aufweist, die die thermische Kopplung verringern sollen. Insbesondere können die Nebenflächen 14f, wie in Fig. 5 gezeigt, lediglich durch dünne Stege (etwa Stege mit einer Breite von höchstens 3 mm) mit der Hauptfläche 14e verbunden sein. Um die thermische Kopplung zwischen dem zweiten Temperatursensor 2 und der Rohrleitung 6 zu verbessen, kann auf der Rückseite der Leiterplatte 14 (d.h. auf der Seite der Leiterplatte, die der Rohrleitung 6 zugewandt ist) ein Wärmeleitpad vorgesehen sein. Zudem können auf der Rückseite der Leiterplatte 14, an der Position zumindest des zweiten Temperatursensors 2 flächige Metallisierungen vorgesehen sein, um eine thermische Kopplung zu der Rohrleitung 6 bzw. der Umgebungstemperatur zu verbessern.

In Fig. 5 ist zudem zu erkennen, dass die Leiterplatte 14 neben den Ausnehmungen 14b für die thermische Isolation zwischen Auswerteeinrichtung 4 und den Temperatursensoren 2, 3 weitere Ausnehmungen aufweisen kann. Insbesondere weist die Leiterplatte 14 Ausnehmungen 14a auf, die, wie in Fig. 6 gezeigt ist, mit Stegen 7c des Gehäuses 7 interagieren, um zu verhindern, dass die Leiterplatte 14 relativ zu dem Gehäuse 7 verrutscht. Auch weist die Leiterplatte 14 Ausnehmungen 14c aus, die mit den Befestigungsschlitzen 7a des Gehäuses 7 korrespondieren und die Befestigung des Gehäuses 7 an der Rohrleitung 6 mittels Kabelbinder ermöglichen. Schließlich weist die Leiterplatte 14 noch eine Ausnehmung 14d auf, die das Einstecken eines Verbindungskabels 5b zwischen der Schaltung 5a und der Batterie ermöglicht. In Fig. 6 ist die Sensorvorrichtung 1 mit Leiterplatte 14 und Gehäuse 7 gezeigt. Es ist zu beachten, dass die Schlitze 7a, 14c durchgängig sind, um die Befestigung des Gehäuses 7 an der Rohrleitung 6 zu ermöglichen.

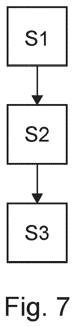

Die vorliegende Erfindung bezieht sich nicht nur auf eine Sensorvorrichtung 1, sondern auch auf ein entsprechendes Verfahren, das beispielsweise mit Hilfe der Sensorvorrichtung 1 und/oder Recheneinheit 4, 4' ausgeführt werden kann. Fig. 7 zeigt ein Flussdiagramm des Verfahrens zum Bestimmen eines Fluidflusses durch eine Rohrleitung 6, insbesondere zur Leckageerkennung. Das Verfahren umfasst ein Erhalten S1 von ersten Sensordaten eines ersten Temperatursensors 3. Das Verfahren umfasst ein Erhalten S2 von zweiten Sensordaten eines zweiten Temperatursensors 2, wobei der erste Temperatursensor 2 eine größere Distanz von der Rohrleitung 6 aufweist als der erste Temperatursensor 3. Das Verfahren umfasst ferner ein Bestimmen S3 eines Fluidflusses durch die Rohrleitung 6 basierend auf den ersten und zweiten Sensordaten.

Die vorliegende Erfindung kann in einer Implementierung bereits sehr kleine Wasserflüsse ab 3 Millilitern pro Minute bzw. 180 Millilitern pro Stunde erkennen. Ein Vorteil ist, dass sie nicht darauf ausgelegt ist, den genauen Wasserverbrauch zu messen, sondern hauptsächlich darauf, das Vorhandensein von Wasserflüssen zu erkennen. Sie kann über eine eigene Stromversorgung und eine unabhängige Funkverbindung verfügen, sodass sie auch bei Strom-, WLAN- und Netzwerkausfällen funktioniert. Die Daten können in manchen Implementierungen nicht direkt auf dem Gerät, sondern in einem dazugehörigen Cloud-System verarbeitet werden, was den Einsatz fortgeschrittener künstlicher Intelligenz ermöglicht und Falschalarme vermeidet. Zudem werden nicht nur Gleichgewichtszustände erkannt werden, um Leckagen auszuschließen, sondern die dynamischen Veränderungen können per künstlicher Intelligenz analysiert werden. Es können dementsprechend auch komplexere Gebäude wie z.B. Mehrfamilienhäuser überwacht werden.

Zudem ermöglicht die erfindungsgemäße Sensorvorrichtung eine nicht-invasive Installation und kann von Hauseigentümern ohne Fachkenntnisse und ohne Werkzeug angebracht werden. Mit einer geeigneten Batterie und Funktechnologie funktioniert sie unabhängig von entfernten Energie- oder Internetquellen. Die Recheneinheit stützt sich in manchen Implementierungen auf eine KI (Künstliche Intelligenz) -basierte Überwachung und erkennt kontinuierlich Muster und Auffälligkeiten im Wasserfluss. Die Sensorvorrichtung und Auswertung durch die Recheneinheit ermöglicht Schadensprävention, denn eine frühzeitige Erkennung ermöglicht schnelles Eingreifen, um potenzielle Schäden sowie den Verlust von Trinkwasser zu minimieren. Durch den Einsatz dieses intelligenten Sensors können sowohl Wasserressourcen effektiv geschützt als auch kostspielige Wasserschäden vermieden werden.

Die Erfindung bezieht sich auf einen Wasserleckagesensor und ein entsprechendes Auswertungsverfahren, das von der Recheneinheit ausgeführt wird. Der Sensor zur Leckageerkennung basiert auf einer Messung von Raum- und Rohrtemperatur, wobei der Raum als Wärmequelle und Frischwasser als Kühlquelle (oder der Raum als Kühlquelle und Heißwasser als Wärmequelle) dient. Der Wasserleckagesensor kann eine autarke Funkverbindung und eine eigene Energiequelle aufweisen. Eine Kalibrierung kann automatisch mittels eines Algorithmus durchgeführt werden. Die Leckageerkennung kann automatisch mittels einer künstlichen Intelligenz, d.h. mittels eines Maschinenlern-Modells durchgeführt werden. Datenkompression kann zur sparsamen Datenübertragung genutzt werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Sensorvorrichtung
- 2: Zweiter Temperatursensor, rohrseitiger Temperaturmesser
- 3: Erster Temperatursensor, Raumtemperaturmesser
- 4: Auswerteeinrichtung, lokale Recheneinheit
- 4': Externe Recheneinheit
- 4a: Schnittstelle
- 4b: Prozessor
- 4c: Speicher
- 5: Batterie
- 5a: Schaltung zum Anschluss einer Batterie
- 5b: Verbindungskabel
- 6: Rohrleitung
- 7: Gehäuse
- 7a: Befestigungseinrichtung, schlitzförmige Öffnungen
- 7b: Befestigungsbereich
- 7c: Steg des Gehäuses
- 8: Umgebungstemperatur
- 9: Rohrtemperatur
- 10: Vorhersage der Rohrtemperatur
- 11: Wasserverbrauch
- 12: Keine Leckage
- 13: Mögliche Leckage
- 14: Leiterplatte
- 14a: Ausnehmung für Nut des Gehäuses
- 14b: Ausnehmung für thermische Isolierung
- 14c: Schlitzförmige Öffnung für Befestigungsmittel
- 14d: Ausnehmung für Verbindungskabel zum Anschluss einer Batterie
- 14e: Hauptfläche der Leiterplatte
- 14f: Nebenfläche der Leiterplatte
- S1: Erhalten von ersten Sensordaten
- S2: Erhalten von zweiten Sensordaten
- S3: Bestimmen eines Fluidflusses

## Patentansprüche

1. Sensorvorrichtung (1) für eine ein Fluid führende Rohrleitung (6), insbesondere zur Leckageerkennung, umfassend ein Gehäuse (7) zur Anordnung an der Rohrleitung (6), einen ersten Temperatursensor (3), einen zweiten Temperatursensor (2) und eine Auswerteeinrichtung (4), wobei die Temperatursensoren (2, 3) derart in und/oder an dem Gehäuse (7) angeordnet sind, dass im an der Rohrleitung (6) befestigten Zustand des Gehäuses, der erste Temperatursensor (3) eine größere Distanz zu der Rohrleitung (6) aufweist als der zweite Temperatursensor (2), wobei die Auswerteeinrichtung (4) dazu ausgebildet ist, um a) als lokale Recheneinheit erste Sensordaten des ersten Temperatursensors (3) und zweite Sensordaten des zweiten Temperatursensors (2) zu verarbeiten und/oder b) die ersten und zweiten Sensordaten einer entfernten Recheneinheit (4') zur Verarbeitung zu übermitteln, um einen Fluidfluss durch die Rohrleitung (6) zu bestimmen
**dadurch gekennzeichnet, dass** die Temperatursensoren (2, 3) und die Auswerteeinrichtung (4) auf einer Leiterplatte (14) angeordnet sind,
und dass die Leiterplatte (14) eine Hauptfläche (14e), auf der die Auswerteeinrichtung (4) angeordnet ist, und zwei Nebenflächen (14f), auf denen jeweils ein Temperatursensor (2, 3) angeordnet ist, aufweist, wobei die Leiterplatte (14) zwischen den Nebenflächen (14f) und der Hauptfläche (14e) jeweils eine Ausnehmung (14b) aufweist, und/oder dass zumindest einer der Temperatursensoren (2, 3) auf einer ersten Seite der Leiterplatte (14) angeordnet ist, wobei die Leiterplatte (14) auf einer zweiten, der ersten Seite gegenüberliegenden Seite zumindest eine flächige Metallisierung aufweist, die von ihrer lateralen Position mit einer lateralen Position des zumindest einen Temperatursensors (2, 3) übereinstimmt.

2. Sensorvorrichtung (1) nach Anspruch 1, **dadurch gekennzeichnet, dass** die Auswerteeinrichtung (4) eine, vorzugsweise zur Drahtloskommunikation eingerichtete, Kommunikationseinrichtung umfasst oder mit einer solchen gekoppelt ist, vorzugsweise wobei die Kommunikationseinrichtung ausgebildet ist, die Sensordaten an die entfernte Recheneinheit zu übermitteln,
und/oder dass das Gehäuse (7) eine Befestigungseinrichtung (7a) mit zumindest einer, insbesondere zwei, vorzugsweise schlitzartigen, Öffnung (7a) umfasst, um das Gehäuse mittels einer oder mehrerer Befestigungselemente, vorzugsweise Kabelbinder, an der Rohrleitung (6) zu befestigen, vorzugsweise wobei die zumindest eine Öffnung (7a), vorzugsweise die zwei Öffnungen (7a), einen Befestigungsbereich (7b) des Gehäuses (7) definiert/definieren, der Befestigungsbereich (7b) im an der Rohrleitung (6) angeordneten Zustand des Gehäuses (7) mit der Rohrleitung (6) in Kontakt steht, und der zweite Temperatursensor (2) innerhalb des Befestigungsbereichs (7b) und der erste Temperatursensor (3) außerhalb des Befestigungsbereichs (7b) des Gehäuses (7) angeordnet ist.

3. Sensorvorrichtung (1) nach Anspruch 1 oder 2, **dadurch gekennzeichnet, dass** an dem zweiten Temperatursensor (2) ein Wärmeleitelement, vorzugsweise ein Wärmeleitpad, angeordnet ist, um die thermische Kopplung mit der Rohrleitung (6) zu verbessern.

4. Sensorvorrichtung (1) nach Anspruch 3, **dadurch gekennzeichnet, dass** die Nebenflächen (14f) durch Stege mit der Hauptfläche (14e) verbunden sind.

5. Sensorvorrichtung (1) gemäß einem der Ansprüche 1 bis 4, **dadurch gekennzeichnet, dass** die Auswerteeinrichtung (4) und die Temperatursensoren (2, 3) so angeordnet sind, dass eine laterale Distanz zwischen der Auswerteeinrichtung und den Temperatursensoren (2, 3) jeweils zumindest 50% einer größten lateralen Ausdehnung des Gehäuses (7) entspricht,
und/oder umfassend eine Schaltung (5a) zum Anschluss einer Batterie (5), wobei die Schaltung (5a) dazu ausgebildet ist, um elektrische Energie der Batterie (5) für die Temperatursensoren (2, 3) und die Auswerteeinrichtung (4) bereitzustellen.

6. System, umfassend die Sensorvorrichtung (1) nach einem der Ansprüche 1 bis 5 und eine Recheneinheit (4, 4') mit einer Schnittstelle (4a) zum Erhalten von ersten Sensordaten und von zweiten Sensordaten von der Sensorvorrichtung (1), wobei die ersten Sensordaten Temperaturmessungen an einer ersten Position in und/oder an einem Gehäuse (7) mit einer größeren Distanz zu einer Rohrleitung (6), insbesondere einer Umgebungstemperatur, repräsentieren, und die zweiten Sensordaten Temperatururmessungen an einer zweiten Position in und/oder an dem Gehäuse (7) mit einer kleineren Distanz zu der Rohrleitung (6), insbesondere einer Oberflächentemperatur der Rohrleitung (6), repräsentieren, wobei die Recheneinheit (4, 4') einen Prozessor (4b) umfasst, der ausgebildet ist, um einen Fluidfluss durch die Rohrleitung (6) basierend auf den ersten Sensordaten und den zweiten Sensordaten zu bestimmen, vorzugsweise dass der Prozessor (4b) dazu ausgebildet ist, basierend auf einem zeitlichen Verlauf der Temperaturmessungen, die zumindest in den ersten Sensordaten enthalten sind, und basierend auf den zweiten Sensordaten einen Fluidfluss durch die Rohrleitung (6) zu bestimmen, wobei die Recheneinheit (4') eine entfernte Recheneinheit ist, die separat von der Sensorvorrichtung (1) angeordnet ist.

7. Sensorvorrichtung (1) nach einem der Ansprüche 1 bis 5, umfassend eine Recheneinheit (4, 4') mit einer Schnittstelle (4a) zum Erhalten von ersten Sensordaten und von zweiten Sensordaten von der Sensorvorrichtung (1), wobei die ersten Sensordaten Temperaturmessungen an einer ersten Position in und/oder an einem Gehäuse (7) mit einer größeren Distanz zu einer Rohrleitung (6), insbesondere einer Umgebungstemperatur, repräsentieren, und die zweiten Sensordaten Temperatururmessungen an einer zweiten Position in und/oder an dem Gehäuse (7) mit einer kleineren Distanz zu der Rohrleitung (6), insbesondere einer Oberflächentemperatur der Rohrleitung (6), repräsentieren, wobei die Recheneinheit (4, 4') einen Prozessor (4b) umfasst, der ausgebildet ist, um einen Fluidfluss durch die Rohrleitung (6) basierend auf den ersten Sensordaten und den zweiten Sensordaten zu bestimmen, vorzugsweise dass der Prozessor (4b) dazu ausgebildet ist, basierend auf einem zeitlichen Verlauf der Temperaturmessungen, die zumindest in den ersten Sensordaten enthalten sind, und basierend auf den zweiten Sensordaten einen Fluidfluss durch die Rohrleitung (6) zu bestimmen, wobei die Auswerteeinrichtung (4) der Sensorvorrichtung (1) die Recheneinheit (4) als lokale Recheneinheit umfasst.

8. Sensorvorrichtung (1) nach Anspruch 6 oder 7, **dadurch gekennzeichnet, dass** der Prozessor (4b) dazu ausgebildet ist, basierend auf Temperatursteigungen oder Temperaturgefällen, insbesondere basierend auf einer Steilheit der Temperatursteigungen oder Temperaturgefälle, innerhalb des zeitlichen Verlaufs der Temperaturmessungen den Fluidfluss durch die Rohrleitung (6) zu bestimmen,
und/oder dass der Prozessor (4b) dazu ausgebildet ist, basierend auf einem zeitlichen Verlauf der Temperaturmessungen an der ersten Position einen vorhergesagten zeitlichen Verlauf der Temperaturmessungen an der zweiten Position zu bestimmen und den vorhergesagten zeitlichen Verlauf der Temperaturmessungen an der zweiten Position mit zumindest einer Temperaturmessung an der zweiten Position zu vergleichen, um einen Fluidfluss durch die Rohrleitung (6) zu bestimmen, insbesondere wobei der Prozessor (4b) ausgebildet ist, um eine Steigung des vorhergesagten zeitlichen Verlaufs der Temperaturmessungen an der zweiten Position mit einer Steigung eines gemessenen zeitlichen Verlaufs der Temperaturmessungen an der zweiten Position zu vergleichen, um einen Fluidfluss durch die Rohrleitung (6) zu bestimmen.

9. Sensorvorrichtung (1) nach Anspruch 8, **dadurch gekennzeichnet, dass** der Prozessor (4b) dazu ausgebildet ist, den vorhergesagten zeitlichen Verlauf der Temperaturmessungen an der zweiten Position mittels eines Vorhersage-Maschinenlern-Modells zu bestimmen.

10. Sensorvorrichtung (1) nach Anspruch 9, **dadurch gekennzeichnet, dass** der Prozessor (4b) dazu ausgebildet ist, das Vorhersage-Maschinenlern-Modell basierend auf den ersten und zweiten Sensordaten, vorzugsweise mittels Überwachtem Lernen, anzupassen,
und/oder **dadurch gekennzeichnet, dass** das Vorhersage-Maschinenlern-Modell ein Zeitreihen-Vorhersage-Maschinenlern-Modell oder ein Regressions-Maschinenlern-Modell ist.

11. Sensorvorrichtung (1) nach einem der Ansprüche 6 bis 8, **dadurch gekennzeichnet, dass** der Prozessor (4b) dazu ausgebildet ist, mittels eines Klassifikations-Maschinenlern-Modells basierend auf den ersten und zweiten Sensordaten einen Fluidfluss durch die Rohrleitung (6) zu bestimmen, vorzugsweise wobei das Klassifikations-Maschinenlern-Modell darauf trainiert ist, basierend auf einem zeitlichen Verlauf der Temperaturmessungen, die zumindest in den ersten Sensordaten enthalten sind, und basierend auf den zweiten Sensordaten eine Klassifikation über einen Fluidfluss durch die Rohrleitung (6) auszugeben.

12. Sensorvorrichtung (1) nach einem der Ansprüche 9 bis 11, **dadurch gekennzeichnet, dass** der Prozessor (4b) dazu ausgebildet ist, dem jeweiligen Maschinenlern-Modell den zeitlichen Verlauf der Temperaturmessungen, die zumindest in den ersten Sensordaten enthalten sind, als aktuelle Eingabedaten bereitzustellen, oder **dadurch gekennzeichnet, dass** das jeweilige Maschinenlern-Modell eine Speicherkomponente, vorzugsweise ein Rekurrentes Neuronales Netzwerk, beispielsweise ein Long Short-Term Memory, umfasst, um den zeitlichen Verlauf der Temperaturmessungen, die zumindest in den ersten Sensordaten enthalten sind, im Speicher zu halten.

13. Sensorvorrichtung (1) nach einem der Ansprüche 6 bis 12, **dadurch gekennzeichnet, dass** der Prozessor (4b) dazu ausgebildet ist, basierend auf einem zeitlichen Verlauf der Temperaturmessungen einen konstanten Temperaturunterschied zwischen den gemessenen Temperaturen an der ersten Position und an der zweiten Position zu bestimmen, einen Gleichgewichtszustand basierend auf aktuellen Temperaturmessungen und basierend auf dem konstanten Temperaturunterscheid detektieren, und einen Fluidfluss durch die Rohrleitung (6) basierend darauf zu bestimmen, ob ein Gleichgewichtszustand vorliegt,
und/oder dass der Prozessor (4b) dazu ausgebildet ist, basierend auf einem zeitlichen Verlauf der Temperaturmessungen, die zumindest in den zweiten Sensordaten enthalten sind, vorzugsweise mittels eines Regressions-Maschinenlern-Modells, den Volumenstrom des durch die Rohrleitung (6) fließenden und/oder geflossenen Fluids zu schätzen, und/oder dass der Prozessor (4b) dazu ausgebildet ist, basierend auf einem erkannten Fluidfluss durch die Rohrleitung (6) eine Leckage zu bestimmen.

14. Verfahren zum Bestimmen eines Fluidflusses durch eine Rohrleitung (6), insbesondere zur Leckageerkennung, unter Nutzung einer Sensorvorrichtung (1) nach einem der Ansprüche 1 bis 5 und einer Recheneinheit (4, 4') mit einer Schnittstelle (4a) zum Erhalten von ersten Sensordaten und von zweiten Sensordaten von der Sensorvorrichtung (1), wobei die ersten Sensordaten Temperaturmessungen an einer ersten Position in und/oder an einem Gehäuse (7) mit einer größeren Distanz zu einer Rohrleitung (6), insbesondere einer Umgebungstemperatur, repräsentieren, und die zweiten Sensordaten Temperatururmessungen an einer zweiten Position in und/oder an dem Gehäuse (7) mit einer kleineren Distanz zu der Rohrleitung (6), insbesondere einer Oberflächentemperatur der Rohrleitung (6), repräsentieren, wobei die Recheneinheit (4, 4') einen Prozessor (4b) umfasst, der ausgebildet ist, um einen Fluidfluss durch die Rohrleitung (6) basierend auf den ersten Sensordaten und den zweiten Sensordaten zu bestimmen,
vorzugsweise dass der Prozessor (4b) dazu ausgebildet ist, basierend auf einem zeitlichen Verlauf der Temperaturmessungen, die zumindest in den ersten Sensordaten enthalten sind, und basierend auf den zweiten Sensordaten einen Fluidfluss durch die Rohrleitung (6) zu bestimmen, umfassend:
- Erhalten (S1) von ersten Sensordaten eines ersten Temperatursensors (3);
- Erhalten (S2) von zweiten Sensordaten eines zweiten Temperatursensors (2), wobei der erste Temperatursensor (3) eine größere Distanz von der Rohrleitung (6) aufweist als der zweite Temperatursensor (2);
- Bestimmen (S3) eines Fluidflusses durch die Rohrleitung (6) basierend auf den ersten und zweiten Sensordaten.

## Claims

1. A sensor device (1) for a fluid-carrying pipeline (6), in particular for leak detection, comprising a housing (7) for arranging it at the pipeline (6), a first temperature sensor (3), a second temperature sensor (2), and an evaluation device (4), wherein the temperature sensors (2, 3) are arranged in and/or on the housing (7) such that, when the housing is in a state of being secured to the pipeline (6), the first temperature sensor (3) has a greater distance from the pipeline (6) than the second temperature sensor (2), wherein the evaluation device (4) is configured to a) process, as a local computing unit, first sensor data from the first temperature sensor (3) and second sensor data from the second temperature sensor (2) and/or b) transmit the first and second sensor data to a remote computing unit (4') for processing in order to determine a fluid flow through the pipeline (6),
**characterized in that** the temperature sensors (2, 3) and the evaluation device (4) are arranged on a printed circuit board (14),
and **in that** the printed circuit board (14) has a main surface (14e), on which the evaluation device (4) is arranged, and two secondary surfaces (14f), on each of which a temperature sensor (2, 3) is arranged, wherein the printed circuit board (14) has a recess (14b) between each of the secondary surfaces (14f) and the main surface (14e), and/or **in that** at least one of the temperature sensors (2, 3) is arranged on a first side of the printed circuit board (14), wherein the printed circuit board (14) has, on a second side opposite the first side, at least one planar metallization whose lateral position coincides with a lateral position of the at least one temperature sensor (2, 3).

2. The sensor device (1) according to claim 1, **characterized in that** the evaluation device (4) comprises a communication device, preferably configured for wireless communication, or is coupled to such a device, wherein preferably the communication device is configured to transmit the sensor data to the remote computing unit,
and/or **in that** the housing (7) comprises a fastening device (7a) having at least one, in particular two, preferably slot-like holes (7a) for fastening the housing to the pipeline (6) by means of one or more fastening elements, preferably cable ties, wherein preferably the at least one hole (7a), preferably the two holes (7a), define(s) a fastening region (7b) of the housing (7), the fastening region (7b) is in contact with the pipeline (6) when the housing (7) is in a state of being arranged at the pipeline (6), and the second temperature sensor (2) is arranged inside the fastening region (7b) and the first temperature sensor (3) is arranged outside the fastening region (7b) of the housing (7).

3. The sensor device (1) according to claim 1 or 2, **characterized in that** a heat-conducting element, preferably a heat-conducting pad, is arranged at the second temperature sensor (2) to improve thermal coupling with the pipeline (6).

4. The sensor device (1) according to claim 3, **characterized in that** the secondary surfaces (14f) are connected to the main surface (14e) by webs.

5. The sensor device (1) according to any one of claims 1 to 4, **characterized in that** the evaluation device (4) and the temperature sensors (2, 3) are arranged such that a lateral distance between each of the evaluation device and the temperature sensors (2, 3) is at least equal to 50 % of a greatest lateral dimension of the housing (7),
and/or comprising a circuit (5a) for connecting a battery (5), wherein the circuit (5a) is configured to provide electrical power from the battery (5) to the temperature sensors (2, 3) and the evaluation device (4).

6. A system, comprising the sensor device (1) according to any one of claims 1 to 5 and a computing unit (4, 4') having an interface (4a) for receiving first sensor data and second sensor data from the sensor device (1), wherein the first sensor data represents temperature measurements at a first position in and/or at a housing (7) at a greater distance from a pipeline (6), in particular an ambient temperature, and the second sensor data represents temperature measurements at a second position in and/or at the housing (7) at a smaller distance from the pipeline (6), in particular a surface temperature of the pipeline (6), wherein the computing unit (4, 4') comprises a processor (4b) configured to determine a fluid flow through the pipeline (6) based on the first sensor data and the second sensor data, preferably such that the processor (4b) is configured to determine a fluid flow through the pipeline (6) based on a temporal progression of the temperature measurements contained in at least the first sensor data and based on the second sensor data, wherein the computing unit (4') is a remote computing unit arranged separately from the sensor device (1).

7. The sensor device (1) according to any one of claims 1 to 5, comprising a computing unit (4, 4') having an interface (4a) for receiving first sensor data and second sensor data from the sensor device (1), wherein the first sensor data represents temperature measurements at a first position in and/or at a housing (7) at a greater distance from a pipeline (6), in particular an ambient temperature, and the second sensor data represents temperature measurements at a second position in and/or at the housing (7) at a smaller distance from the pipeline (6), in particular a surface temperature of the pipeline (6), wherein the computing unit (4, 4') comprises a processor (4b) configured to determine a fluid flow through the pipeline (6) based on the first sensor data and the second sensor data, preferably such that the processor (4b) is configured to determine a fluid flow through the pipeline (6) based on a temporal progression of the temperature measurements contained in at least the first sensor data and based on the second sensor data, wherein the evaluation device (4) of the sensor device (1) comprises the computing unit (4) as a local computing unit.

8. The sensor device (1) according to claim 6 or 7, **characterized in that** the processor (4b) is configured to determine the fluid flow through the pipeline (6) based on temperature increases or temperature decreases, in particular based on the slope of the temperature increases or temperature decreases, within the temporal progression of the temperature measurements,
and/or **in that** the processor (4b) is configured to determine a predicted temporal progression of the temperature measurements at the second position based on a temporal progression of the temperature measurements at the first position, and to compare the predicted temporal progression of the temperature measurements at the second position to at least one temperature measurement at the second position in order to determine a fluid flow through the pipeline (6), in particular wherein the processor (4b) is configured to compare a slope of the predicted temporal progression of the temperature measurements at the second position to a slope of a measured temporal progression of the temperature measurements at the second position in order to determine a fluid flow through the pipeline (6).

9. The sensor device (1) according to claim 8, **characterized in that** the processor (4b) is configured to determine the predicted temporal progression of the temperature measurements at the second position using a prediction machine-learning model.

10. The sensor device (1) according to claim 9, **characterized in that** the processor (4b) is configured to adapt the prediction machine-learning model based on the first and second sensor data, preferably by means of supervised learning,
and/or **characterized in that** the prediction machine-learning model is a time-series prediction machine-learning model or a regression machine-learning model.

11. The sensor device (1) according to any one of claims 6 to 8, **characterized in that** the processor (4b) is configured to determine, using a classification machine learning-model based on the first and second sensor data, a fluid flow through the pipeline (6), wherein preferably the classification machine-learning model is trained to output a classification of a fluid flow through the pipeline (6) based on a temporal progression of the temperature measurements contained in at least the first sensor data and based on the second sensor data.

12. The sensor device (1) according to any one of claims 9 to 11, **characterized in that** the processor (4b) is configured to provide the temporal progression of the temperature measurements contained in at least the first sensor data to the respective machine-learning model as current input data, or **characterized in that** the respective machine-learning model comprises a memory component, preferably a recurrent neural network such as a long short-term memory, to store in the memory the temporal progression of the temperature measurements contained in at least the first sensor data.

13. The sensor device (1) according to any one of claims 6 to 12, **characterized in that** the processor (4b) is configured to determine a constant temperature difference between the measured temperatures at the first position and at the second position based on a temporal progression of the temperature measurements, to detect a state of equilibrium based on current temperature measurements and based on the constant temperature difference, and to determine a fluid flow through the pipeline (6) based on whether a state of equilibrium is present,
and/or **in that** the processor (4b) is configured to estimate, based on a temporal progression of the temperature measurements contained in at least the second sensor data, preferably using a regression machine-learning model, the volumetric flow rate of the fluid flowing and/or having flowed through the pipeline (6), and/or **in that** the processor (4b) is configured to determine a leak based on a detected fluid flow through the pipeline (6).

14. A method for determining a fluid flow through a pipeline (6), in particular for leak detection, using a sensor device (1) according to any one of claims 1 to 5 and a computing unit (4, 4') having an interface (4a) for receiving first sensor data and second sensor data from the sensor device (1), wherein the first sensor data represents temperature measurements at a first position in and/or at a housing (7) at a greater distance from a pipeline (6), in particular an ambient temperature, and the second sensor data represents temperature measurements at a second position in and/or at the housing (7) at a smaller distance from the pipeline (6), in particular a surface temperature of the pipeline (6), wherein the computing unit (4, 4') comprises a processor (4b) configured to determine a fluid flow through the pipeline (6) based on the first sensor data and the second sensor data,
preferably such that the processor (4b) is configured to determine a fluid flow through the pipeline (6) based on a temporal progression of the temperature measurements contained in at least the first sensor data and based on the second sensor data, comprising:
- receiving (S1) first sensor data from a first temperature sensor (3);
- receiving (S2) second sensor data from a second temperature sensor (2), wherein the first temperature sensor (3) has a greater distance from the pipeline (6) than the second temperature sensor (2);
- determining (S3) a fluid flow through the pipeline (6) based on the first and second sensor data.

## Revendications

1. Dispositif capteur (1) destiné à une conduite (6) transportant un fluide, notamment pour la détection de fuites, comprenant un boîtier (7) destiné à être monté sur la conduite (6), un premier capteur de température (3), un deuxième capteur de température (2) et un dispositif d'évaluation (4), les capteurs de température (2, 3) étant disposés dans et/ou sur le boîtier (7) de telle sorte que, lorsque le boîtier est fixé à la conduite (6), le premier capteur de température (3) présente une plus grande distance par rapport à la conduite (6) que le deuxième capteur de température (2), le dispositif d'évaluation (4) étant conçu pour a) traiter, en tant qu'unité de calcul locale, les premières données du premier capteur de température (3) et les deuxièmes données de capteur du deuxième capteur de température (2) et/ou b) de transmettre les premières et deuxièmes données de capteur à une unité de calcul distante (4') en vue de leur traitement, afin de déterminer un écoulement de fluide à travers la conduite (6)
**caractérisé en ce que** les capteurs de température (2, 3) et le dispositif d'évaluation (4) sont disposés sur une carte de circuit imprimé (14),
et **en ce que** la carte de circuit imprimé (14) comporte une face principale (14e), sur laquelle est disposé le dispositif d'évaluation (4) est disposé, et deux faces secondaires (14f) sur chacune desquelles est disposé un capteur de température (2, 3), la carte de circuit imprimé (14) comportant entre les faces secondaires (14f) et la face principale (14e) respectivement un évidement (14b), et/ou **en ce qu'**au moins l'un des capteurs de température (2, 3) est disposé sur une première face de la carte de circuit imprimé (14), la carte de circuit imprimé (14) présentant, sur une seconde face opposée à la première, au moins une métallisation plane dont la position latérale coïncide avec la position latérale dudit au moins un capteur de température (2, 3).

2. Dispositif capteur (1) selon la revendication 1, **caractérisé en ce que** le dispositif d'évaluation (4) comprend un dispositif de communication, de préférence conçu pour la communication sans fil, ou est couplé à un tel dispositif, le dispositif de communication étant de préférence conçu pour transmettre les données du capteur à l'unité de calcul distante,
et/ou **en ce que** le boîtier (7) comprend un dispositif de fixation (7a) comportant au moins une, en particulier deux, ouvertures (7a) de préférence en forme de fente, afin de fixer le boîtier à la conduite (6) à l'aide d'un ou plusieurs éléments de fixation, de préférence des serre-câbles, lesdites au moins une ouverture (7a), de préférence les deux ouvertures (7a), définissent une zone de fixation (7b) du boîtier (7), la zone de fixation (7b) étant en contact avec la conduite (6) lorsque le boîtier (7) est disposé sur celle-ci (6) ; et le deuxième capteur de température (2) est disposé dans la zone de fixation (7b) et le premier capteur de température (3) sur la zone de fixation (7b) du boîtier (7).

3. Dispositif capteur (1) selon la revendication 1 ou 2, **caractérisé en ce qu'**un élément thermoconducteur, de préférence un coussinet thermoconducteur, est disposé sur le deuxième capteur de température (2) afin d'améliorer le couplage thermique avec la conduite (6).

4. Dispositif capteur (1) selon la revendication 3, **caractérisé en ce que** les surfaces secondaires (14f) sont reliées à la surface principale (14e) par des nervures.

5. Dispositif capteur (1) selon l'une des revendications 1 à 4, **caractérisé en ce que** le dispositif d'évaluation (4) et les capteurs de température (2, 3) sont disposés de telle sorte qu'une distance latérale entre le dispositif d'évaluation et les capteurs de température (2, 3) corresponde respectivement à au moins 50 % de la plus grande dimension latérale du boîtier (7), et/ou comprenant un circuit (5a) destiné au raccordement d'une batterie (5), le circuit (5a) étant conçu pour fournir l'énergie électrique de la batterie (5) aux capteurs de température (2, 3) et au dispositif d'évaluation (4).

6. Système comprenant le dispositif capteur (1) selon l'une des revendications 1 à 5 et une unité de calcul (4, 4') dotée d'une interface (4a) pour recevoir des premières données de capteurs et des deuxièmes données de capteurs provenant du dispositif capteur (1), les premières données de capteur représentant des mesures de température à une première position dans et/ou sur un boîtier (7) situé à une plus grande distance d'une conduite (6), notamment une température ambiante, et les deuxièmes données de capteur représentent des mesures de température à une deuxième position dans et/ou sur le boîtier (7), à une distance plus faible de la conduite (6), en particulier une température de surface de la conduite (6), l'unité de calcul (4, 4') comprenant un processeur (4b) conçu pour déterminer un écoulement de fluide à travers la conduite (6) sur la base des premières données de capteur et des deuxièmes données de capteur, de préférence en ce que le processeur (4b) est conçu pour déterminer, sur la base d'une évolution temporelle des mesures de température contenues au moins dans les premières données de capteur et sur la base des deuxièmes données de capteur, un écoulement de fluide à travers la conduite (6), l'unité de calcul (4') étant une unité de calcul distante, disposée séparément du dispositif capteur (1).

7. Dispositif capteur (1) selon l'une des revendications 1 à 5, comprenant une unité de calcul (4, 4') dotée d'une interface (4a) pour recevoir des premières données de capteur et des deuxièmes données de capteur provenant du dispositif de capteur (1), les premières données de capteur représentant des mesures de température à une première position dans et/ou sur un boîtier (7) situé à une plus grande distance d'une conduite (6), en particulier une température ambiante, et les deuxièmes données de capteur représentent des mesures de température en une deuxième position dans et/ou sur le boîtier (7), situé à une distance plus faible de la conduite (6), en particulier une température de surface de la conduite (6), l'unité de calcul (4, 4') comprend un processeur (4b) conçu pour déterminer un écoulement de fluide à travers la conduite (6) sur la base des premières données de capteur et des deuxièmes données de capteur, de préférence le processeur (4b) étant conçu pour déterminer, sur la base d'une évolution temporelle des mesures de température contenues au moins dans les premières données de capteur et sur la base des deuxièmes données de capteur, de déterminer un écoulement de fluide à travers la conduite (6), le dispositif d'évaluation (4) du dispositif capteur (1) comprenant l'unité de calcul (4) en tant qu'unité de calcul locale.

8. Dispositif capteur (1) selon la revendication 6 ou 7, **caractérisé en ce que** le processeur (4b) est conçu pour déterminer l'écoulement de fluide à travers la conduite (6) sur la base de hausses ou de baisses de température, en particulier sur la base d'une pente des hausses ou des baisses de température, au sein de l'évolution temporelle des mesures de température,
et/ou **en ce que** le processeur (4b) est conçu pour déterminer, sur la base d'une évolution temporelle des mesures de température à la première position, une évolution temporelle prédite des mesures de température à la deuxième position, et pour comparer l'évolution temporelle prédite des mesures de température à la deuxième position avec au moins une mesure de température à la deuxième position, afin de déterminer un écoulement de fluide à travers la conduite (6), le processeur (4b) étant notamment conçu pour comparer une pente de l'évolution temporelle prédite des mesures de température à la deuxième position avec une pente d'une évolution temporelle mesurée des mesures de température à la deuxième position, afin de déterminer un écoulement de fluide à travers la conduite (6).

9. Dispositif capteur (1) selon la revendication 8, **caractérisé en ce que** le processeur (4b) est conçu pour déterminer l'évolution temporelle prédite des mesures de température au niveau de la deuxième position à l'aide d'un modèle de prédiction par apprentissage automatique.

10. Dispositif capteur (1) selon la revendication 9, **caractérisé en ce que** le processeur (4b) est conçu pour adapter le modèle de prédiction par apprentissage automatique sur la base des premières et deuxièmes données de capteur, de préférence au moyen d'un apprentissage supervisé, et/ou **en ce que** le modèle de prédiction par apprentissage automatique est un modèle de prédiction de séries chronologiques par apprentissage automatique ou un modèle de régression par apprentissage automatique.

11. Dispositif capteur (1) selon l'une des revendications 6 à 8, **caractérisé en ce que** le processeur (4b) est conçu pour déterminer, au moyen d'un modèle de classification d'apprentissage automatique basé sur les premières et deuxièmes données de capteur, un écoulement de fluide à travers la conduite (6), de préférence le modèle de classification par apprentissage automatique étant entraîné pour fournir, sur la base d'une évolution temporelle des mesures de température contenues au moins dans les premières données de capteur et sur la base des deuxièmes données de capteur, une classification concernant un écoulement de fluide à travers la conduite (6).

12. Dispositif capteur (1) selon l'une des revendications 9 à 11, **caractérisé en ce que** le processeur (4b) est conçu pour fournir au modèle d'apprentissage automatique concerné l'évolution temporelle des mesures de température contenues au moins dans les premières données de capteur, en tant que données d'entrée actuelles, ou **en ce que** le modèle d'apprentissage automatique correspondant comprend un composant de mémoire, de préférence un réseau neuronal récurrent, par exemple une mémoire à court et long terme (LSTM), afin de conserver en mémoire l'évolution temporelle des mesures de température contenues au moins dans les premières données de capteur.

13. Dispositif capteur (1) selon l'une des revendications 6 à 12, **caractérisé en ce que** le processeur (4b) est conçu pour déterminer, sur la base d'une évolution temporelle des mesures de température, une différence de température constante entre les températures mesurées à la première position et à la deuxième position, pour détecter un état d'équilibre sur la base des mesures de température actuelles et sur la différence de température constante, et de déterminer un écoulement de fluide à travers la conduite (6) en fonction de l'existence ou non d'un état d'équilibre,
et/ou **en ce que** le processeur (4b) est conçu pour estimer, sur la base d'une courbe temporelle des mesures de température contenues au moins dans les données du deuxième capteur, de préférence à l'aide d'un modèle de régression par apprentissage automatique, le débit volumique du fluide circulant ou ayant circulé dans la conduite (6), et/ou s'est écoulé, et/ou que le processeur (4b) est conçu pour déterminer une fuite sur la base d'un écoulement de fluide détecté dans la conduite (6).

14. Procédé pour déterminer un écoulement de fluide à travers une conduite (6), en particulier pour la détection de fuites, en utilisant un dispositif capteur (1) selon l'une des revendications 1 à 5 et une unité de calcul (4, 4') dotée d'une interface (4a) destinée à recevoir des premières données de capteur et des deuxièmes données de capteur provenant du dispositif capteur (1), les premières données de capteur représentant des mesures de température à une première position dans et/ou sur un boîtier (7) situé à une plus grande distance d'une conduite (6), notamment une température ambiante, et les deuxièmes données de capteur représentant des mesures de température en une deuxième position dans et/ou sur le boîtier (7), situé à une distance plus faible de la conduite (6), en particulier une température de surface de la conduite (6), l'unité de calcul (4, 4') comprenant un processeur (4b) conçu pour déterminer un écoulement de fluide à travers la conduite (6) sur la base des premières données de capteur et des deuxièmes données de capteur,
de préférence, le processeur (4b) étant conçu pour déterminer un écoulement de fluide à travers la conduite (6) sur la base d'une évolution temporelle des mesures de température contenues au moins dans les premières données de capteur et sur la base des deuxièmes données de capteur, comprenant les étapes consistant à :
- l'acquisition (S1) de premières données de capteur provenant d'un premier capteur de température (3) ;
- l'acquisition (S2) de deuxièmes données de capteur provenant d'un deuxième capteur de température (2), le premier capteur de température (3) étant situé à une plus grande distance de la conduite (6) que le deuxième capteur de température (2) ;
- la détermination (S3) d'un écoulement de fluide dans la conduite (6) sur la base des premières et deuxièmes données de capteur.
